# EUROPEAN PATENT SPECIFICATION

(11) **EP 3 461 215 B1**
(45) Date of publication and mention of the grant of the patent: **03.03.2021**
(21) Application number: 17809605.3
(22) Date of filing: 16.05.2017
(51) Int. Cl.: H04W 76/12

(54) **METHOD AND APPARATUS FOR CONFIGURING RADIO BEARER OF WEARABLE DEVICE**
VERFAHREN UND VORRICHTUNG ZUR KONFIGURATION DES FUNKTRÄGERS EINER WEARABLE-VORRICHTUNG
PROCÉDÉ ET APPAREIL POUR CONFIGURER UN SUPPORT RADIO D'UN DISPOSITIF POUVANT ÊTRE PORTÉ

(30) Priority: 06.06.2016 CN 201610395500
(43) Date of publication of application: 27.03.2019
(73) Proprietor: Huawei Technologies Co., Ltd., Longgang District Shenzhen, Guangdong 518129 (CN)
(72) Inventor: LI, Guorong, Shenzhen Guangdong 518129 (CN); WANG, Jian, Shenzhen Guangdong 518129 (CN); JIN, Hui, Shenzhen Guangdong 518129 (CN); OUYANG, Guowei, Shenzhen Guangdong 518129 (CN); WANG, Da, Shenzhen Guangdong 518129 (CN)
(74) Representative: Epping - Hermann - Fischer
(86) International application number: PCT/CN2017/084616
(87) International publication number: WO 2017/211166

(56) References cited:
- EP-A1- 3 163 966
- EP-A1- 3 334 225
- WO-A1-2010/105410
- WO-A1-2014/179960
- CN-A- 102 342 035
- CN-A- 105 611 642
- CN-A- 105 611 642
- US-A1- 2010 009 675
- US-A1- 2013 016 649
- US-A1- 2013 016 649
- "3rd Generation Partnership Project; Technical Specification Group Services and System Aspects; Proximity-based services (ProSe); Stage 2 (Release 13)", 3GPP TS 23.303, 31 March 2016 (2016-03-31), pages 11-39, XP055562399,

## Description

### TECHNICAL FIELD

The present invention relates to the field of communications technologies, and in particular, to a radio bearer configuration technology in a wireless communications system.

### BACKGROUND

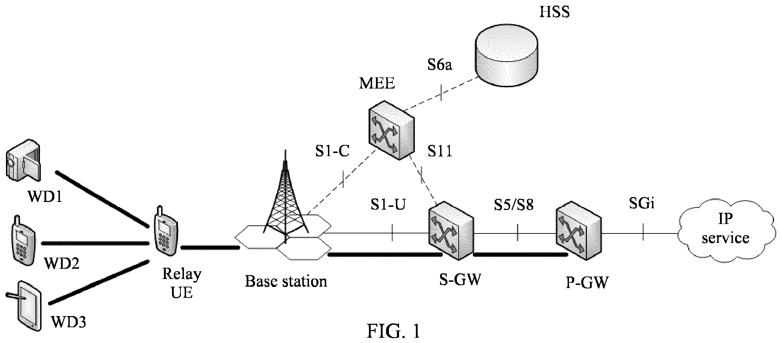

Currently, wearable devices (Wearable Device, WD) are widely applied in aspects such as instant communication, motion recording, health, and positioned nursing. When a WD is connected to a cellular network for a long time, power consumption of the WD increases significantly. Therefore, the WD is connected to a network side by using relay user equipment (User Equipment, UE), to minimize battery consumption of the WD. In a schematic diagram shown in FIG. 1 in which a WD is connected to a network side, a communication link is set up between the WD and relay UE based on an LTE protocol, a Bluetooth protocol, wireless fidelity (Wireless Fidelity, Wi-Fi), or another protocol, the relay UE is connected to an evolved UMTS terrestrial radio access network node B (Evolved UMTS Terrestrial Radio Access Network Node B, eNB), and the eNB is connected to another network entity on the network side.

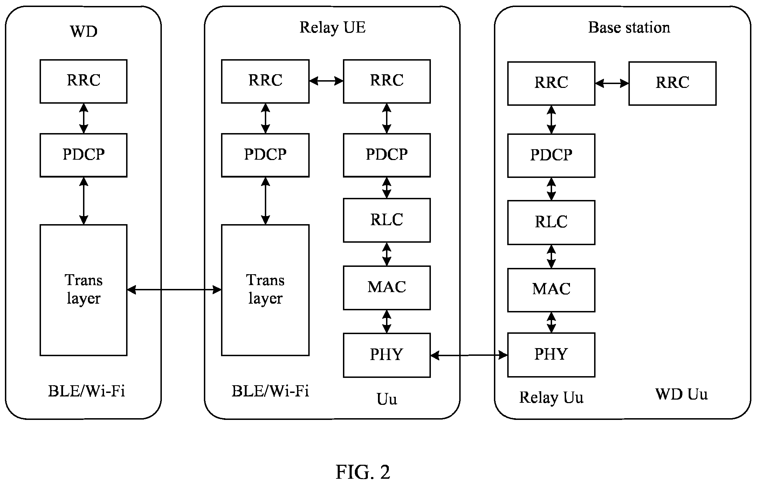

When accessing the network side, a WD needs to set up a radio resource control (Radio Resource Control, RRC) connection to the eNB. However, in an existing control plane protocol, there is an RRC connection between the WD and the relay UE, but there is no direct RRC connection between the WD and the eNB. In an RRC connection setup process, an RRC message is terminated between the WD and the relay UE. However, in an RRC connection reconfiguration process, the eNB is responsible for RRC connection reconfiguration for the WD, as shown in a diagram of a control plane protocol stack in FIG. 2.

To configure a radio resource for the WD, the relay UE identifies an RRC message used for setting up an RRC connection between the relay UE and the base station and an RRC message sent by each WD connected to the relay UE. When receiving an RRC reconfiguration message sent by the eNB, the relay UE triggers reconfiguration of the radio resource between the relay UE and the WD. In addition, the relay UE maps a radio link or a radio bearer on a Uu interface of the relay UE to a radio link or a radio bearer on an interface between the WD and the UE, so that data can be transmitted between the WD and the eNB.

The method for configuring a radio resource for the WD according to the prior art has the following disadvantages: (1) Because the RRC message sent by the WD is clear and visible to the relay UE, when the WD and the relay UE belong to two different users (for example, the relay UE belongs to a public place and is a smart terminal in a coffee shop, and the WD belongs to an individual user and is a smartwatch of the individual user), the relay UE in the public place may be simultaneously connected to WDs of a plurality of individual users, and a connection between the relay UE and the WD is insecure. (2) Because the relay UE needs to process a message sent by the WD, complexity and processing load of the relay UE are increased.

Document US 2013/0016649 A1 provides methods and apparatus related to various considerations for using systems comprising user equipment (UE) relays. One method generally includes receiving, at a UE functioning as a relay, data from a first apparatus; and relaying the received data to a second apparatus, wherein the relaying does not involve interpreting or altering security features of the received data.

### SUMMARY

The present invention is defined by the attached set of claims.

This specification describes a method and an apparatus for configuring a radio bearer for a wearable device, to implement a secure connection between a WD and relay UE, and reduce complexity and processing load of the relay UE in message processing.

According to an aspect, this application provides a method for configuring a radio bearer for a wearable device, where the method includes: Abase station sends a first message to relay UE, where the first message includes first radio bearer configuration information; the base station receives a first complete message sent by the relay UE after the relay UE configures radio bearers for the WD on interfaces of the relay UE based on the first radio bearer configuration information; the base station sends a second message to the WD, where the second message includes second radio bearer configuration information; the base station receives a second complete message sent by the WD after the WD configures a radio bearer on an interface of the WD based on the second radio bearer configuration information; and the base station sets up a wireless connection to the WD by using the relay UE. In this embodiment of the present invention, the base station can separately configure the radio bearers on the interfaces of the relay UE and the interface of the WD based on the radio bearer configuration information, so that the relay UE performs transparent transmission for communication between the base station and the WD. In this way, a secure connection between the WD and the relay UE is implemented and complexity and processing load of the relay UE in processing a communication message between the base station and the WD are reduced.

In a possible design, before the sending, by a base station, a first message to relay UE, the method further includes:
receiving, by the base station, a third message sent by the WD by using a cellular link, where the third message includes attribute information of the relay UE; determining, by the base station, the relay UE based on the attribute information of the relay UE;
sending, by the base station, the attribute information of the relay UE to a mobility management entity MME when context information of the relay UE is not stored on the base station; forwarding, by the base station to the relay UE, a paging message sent by the MME when the MME determines that the relay UE is in an idle mode;
receiving, by the base station, a radio resource control RRC connection request message sent by the relay UE based on the paging message; and setting up, by the base station, an RRC connection to the relay UE based on the RRC connection request message.

In a possible design, before the receiving, by the base station, a third message sent by the WD by using a cellular link, the method further includes: setting up, by the base station, an RRC connection to the WD by using the cellular link.

In a possible design, before the sending, by a base station, a first message to relay UE, the method further includes: receiving, by the base station, an evolved radio access bearer E-RAB setup message sent by an MME; and sending, by the base station, the first message to the relay UE based on the E-RAB setup message.

In a possible design, before the sending, by a base station, a first message to relay UE, the method further includes:
receiving, by the base station, a first RRC connection request message sent by the relay UE; setting up, by the base station, an RRC connection to the relay UE based on the first RRC connection request message; receiving, by the base station, a second RRC connection request message sent by the WD and forwarded by the relay UE, where the second RRC connection request message is sent by the relay UE by using a signaling radio bearer SRB or a data radio bearer DRB on a Uu interface; and sending, by the base station, the first message to the relay UE based on the second RRC connection request message.

In a possible design, the first radio bearer configuration information includes a first configuration policy; and
the first configuration policy is used to instruct the relay UE to configure radio bearers for the WD on a Uu interface and a radio interface of the relay UE, so that the radio interface of the relay UE bears a message transmitted on an SRB or a DRB of the WD, and the message transmitted on the SRB or the DRB of the WD is transparently transmitted to the base station by using the Uu interface.

In a possible design, that the first configuration policy instructs the relay UE to configure a radio bearer for the WD on a radio interface of the relay UE specifically includes: instructing the relay UE to set up an SRB or a DRB on the radio interface; and
that the first configuration policy instructs the relay UE to configure a radio bearer for the WD on a Uu interface of the relay UE specifically includes: instructing the relay UE to set up a first DRB on the Uu interface, where the first DRB bears the message transmitted on the SRB or the DRB of the WD; or instructing the relay UE to use a second DRB that has been set up on the Uu interface, to bear the message transmitted on the SRB or the DRB of the WD; or instructing the relay UE to use an SRB that has been set up on the Uu interface, to bear the message transmitted on the SRB of the WD.

In a possible design, the second radio bearer configuration information includes a second configuration policy; and
the second configuration policy is used by the WD to configure an SRB or a DRB on a radio interface of the WD.

In a possible design, the sending, by the base station, a second message to the WD specifically includes: sending, by the base station, the second message to the WD by using the cellular link. In a possible design, the sending, by the base station, a second message to the WD specifically includes: sending, by the base station, the second message to the WD by using a relay link.

In another aspect, this application provides a method for configuring a radio bearer for a wearable device, where the method includes: receiving, by relay UE, a first message sent by a base station, where the first message includes first radio bearer configuration information; configuring, by the relay UE, radio bearers for the WD on interfaces of the relay UE based on the first radio bearer configuration information; and sending, by the relay UE, a first complete message to the base station, so that the base station sends a second message to the WD based on the first complete message.

In a possible design, before the receiving, by relay UE, a first message sent by a base station, the method further includes:
receiving, by the relay UE, a paging message forwarded by the base station, where the paging message is sent by a mobility management entity MME when the MME determines that the relay UE is in an idle mode; and sending, by the relay UE, a radio resource control RRC connection request message to the base station based on the paging message, and setting up an RRC connection to the base station.

In a possible design, before the receiving, by relay UE, a first message sent by a base station, the method further includes:
setting up, by the relay UE, a radio interface connection to the WD; receiving, by the relay UE by using the radio interface connection that is set up, an RRC connection request message sent by the WD; setting up, by the relay UE, a signaling radio bearer SRB on a Uu interface based on the RRC connection request message, where the SRB is used to bear the RRC connection request message; setting up, by the relay UE, an RRC connection to the base station based on the RRC connection request message when the relay UE is in an idle mode; and forwarding, by the relay UE, the RRC connection request message to the base station by using the SRB or a data radio bearer DRB that has been set up on the Uu interface, so that the base station sends the first message to the relay UE based on the RRC connection request message.

In a possible design, the first radio bearer configuration information includes a first configuration policy; and
the configuring, by the relay UE, radio bearers for the WD on interfaces of the relay UE based on the first radio bearer configuration information specifically includes: separately configuring, by the relay UE, radio bearers for the WD on a Uu interface and a radio interface of the relay UE based on the first configuration policy; and setting up and storing, by the relay UE, a mapping relationship between the radio bearer on the Uu interface and the radio bearer on the radio interface.

In a possible design, the configuring, by the relay UE, a radio bearer for the WD on a Uu interface of the relay UE based on the first configuration policy specifically includes:
setting up, by the relay UE, a first DRB on the Uu interface based on the first configuration policy, where the first DRB bears a message transmitted on an SRB or a DRB of the WD; or using, by the relay UE based on the first configuration policy, a second DRB that has been set up on the Uu interface, to bear a message transmitted on an SRB or a DRB of the WD; or using, by the relay UE based on the first configuration policy, an SRB that has been set up on the Uu interface, to bear a message transmitted on an SRB of the WD; and
setting up, by the relay UE, the radio bearer on the radio interface of the relay UE based on the first configuration policy.

In a possible design, the method further includes: setting up, by the relay UE, a radio interface connection to the WD after the WD configures a radio bearer on a radio interface of the WD based on the second message, so that the WD communicates with the base station by using the radio interface connection.

According to another aspect, this application provides a method for configuring a radio bearer for a wearable device, where the method includes:
receiving, by the WD, a first message sent by a base station, where the first message includes first radio bearer configuration information; configuring, by the WD, a radio bearer on an interface of the WD based on the first radio bearer configuration information; and sending, by the WD, a first complete message to the base station.

In a possible design, before the receiving, by the WD, a first message sent by a base station, the method further includes:
sending, by the WD, a second message to the base station by using a cellular link, where the second message includes attribute information of relay UE that is to be connected to the WD, and the attribute information of the relay UE is used to enable the base station to initiate paging to the relay UE.

In a possible design, before the sending, by the WD, a second message to the base station by using a cellular link, the method further includes: setting up, by the WD, a radio resource control RRC connection to the base station by using the cellular link.

In a possible design, before the receiving, by the WD, a first message sent by a base station, the method further includes:
setting up, by the WD, a radio interface connection to the relay UE; and sending, by the WD, an RRC connection request message to the relay UE by using the radio interface connection that is set up, where the RRC connection request message is used to enable the relay UE to set up a signaling radio bearer SRB on a Uu interface and set up an RRC connection to the base station, and the SRB is used to bear the RRC connection request message.

In a possible design, the first radio bearer configuration information includes a first configuration policy; and
the configuring, by the WD, a radio bearer on an interface of the WD based on the first radio bearer configuration information specifically includes: configuring, by the WD, an SRB or a data radio bearer DRB on a radio interface of the WD based on the first configuration policy.

In a possible design, the receiving, by the WD, a first message sent by a base station specifically includes: receiving, by the WD by using the cellular link, the first message sent by the base station.

In a possible design, the receiving, by the WD, a first message sent by a base station specifically includes: receiving, by the WD by using a relay link, the first message sent by the base station. In a possible design, before the sending, by the WD, a first complete message to the base station, the method further includes:
setting up, by the WD, a radio interface connection to the relay equipment; and the sending, by the WD, a first complete message to the base station specifically includes: sending, by the WD, the first complete message to the base station by using the radio interface connection that is set up.

According to another aspect, this application provides an apparatus for configuring a radio bearer for a wearable device, where the apparatus includes:
a sending unit, configured to send a first message to relay UE, where the first message includes first radio bearer configuration information; a receiving unit, configured to receive a first complete message sent by the relay UE after the relay UE configures radio bearers for the WD on interfaces of the relay UE based on the first radio bearer configuration information, where the sending unit is further configured to send a second message to the WD, where the second message includes second radio bearer configuration information; and the receiving unit is further configured to receive a second complete message sent by the WD after the WD configures a radio bearer on an interface of the WD based on the second radio bearer configuration information; and a connection unit, configured to set up a wireless connection to the WD by using the relay UE.

According to another aspect, this application provides an apparatus for configuring a radio bearer for a wearable device, where the apparatus includes:
a receiving unit, configured to receive a first message sent by a base station, where the first message includes first radio bearer configuration information; a configuration unit is configured to configure radio bearers for the WD on interfaces of the relay UE based on the first radio bearer configuration information; and a sending unit, configured to send a first complete message to the base station, so that the base station sends a second message to the WD based on the first complete message.

According to still another aspect, this application provides an apparatus for configuring a radio bearer for a wearable device, where the apparatus includes: a receiving unit, configured to receive a first message sent by a base station, where the first message includes first radio bearer configuration information; a configuration unit, configured to configure a radio bearer on an interface of the WD based on the first radio bearer configuration information; and a sending unit, configured to send a first complete message to the base station.

Compared with the prior art, after the method and the apparatus for configuring a radio bearer for a wearable device that are provided in the embodiments of the present invention are applied, the base station can separately configure the radio bearers on the interfaces of the relay UE and the interface of the WD based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and a person of ordinary skill in the art can derive other implementations of the present invention from these accompanying drawings without creative efforts. All these embodiments or implementations shall fall within the protection scope of the present invention.
FIG. 1 is a schematic diagram in which a WD is connected to a network side;
FIG. 2 is a diagram of a control plane protocol stack in the prior art;
FIG. 3 is a diagram of a control plane protocol stack according to an embodiment of the present invention;
FIG. 4 is a flowchart of a method for configuring a radio bearer for a wearable device according to an embodiment of the present invention;
FIG. 5 is a flowchart of another method for configuring a radio bearer for a wearable device according to an embodiment of the present invention;
FIG. 6 is a flowchart of still another method for configuring a radio bearer for a wearable device according to an embodiment of the present invention;
FIG. 7 is a time sequence diagram of a method for configuring a radio bearer for a wearable device according to an embodiment of the present invention;
FIG. 8 is a time sequence diagram of another method for configuring a radio bearer for a wearable device according to an embodiment of the present invention;
FIG. 9 is a time sequence diagram of still another method for configuring a radio bearer for a wearable device according to an embodiment of the present invention;
FIG. 10 is a time sequence diagram of still another method for configuring a radio bearer for a wearable device according to an embodiment of the present invention;
FIG. 11 is a structural diagram of an apparatus for configuring a radio bearer for a wearable device according to an embodiment of the present invention;
FIG. 12 is a structural diagram of another apparatus for configuring a radio bearer for a wearable device according to an embodiment of the present invention;
FIG. 13 is a structural diagram of still another apparatus for configuring a radio bearer for a wearable device according to an embodiment of the present invention;
FIG. 14 is a schematic structural diagram of a base station according to an embodiment of the present invention;
FIG. 15 is a schematic structural diagram of relay UE according to an embodiment of the present invention; and
FIG. 16 is a schematic structural diagram of a WD according to an embodiment of the present invention.

### DESCRIPTION OF EMBODIMENTS

The technical solutions according to embodiments of the present invention are clearly and completely described in the following with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

Network architectures and business scenarios described in the embodiments of the present invention aim to more clearly describe the technical solutions in the embodiments of the present invention, but are not intended to limit the technical solutions provided in the embodiments of the present invention. A person of ordinary skill in the art may know that as the network architectures evolve and a new business scenario emerges, the technical solutions provided in the embodiments of the present invention are further applicable to a similar technical problem.

As shown in FIG. 1, a wearable device WD is connected to a network side by using relay UE, the relay UE is connected to an eNB, the eNB is connected to a serving gateway (Serving GateWay, S-GW) and a mobility management entity (Mobility Management Entity, MME) that are on the network side, the S-GW is connected to a public data network (Public Data Network, PDN) gateway (PDN GateWay, P-GW), and the MME is connected to a home subscriber server (Home Subscriber Server, HSS). It can be understood that each entity communicates with another entity by using a fixed interface that is configured. For example, the base station communicates with the S-GW by using an S1-U interface, and the base station communicates with the MME by using an S1-C interface.

The technology described in the present invention is applicable to a Long Term Evolution (Long Term Evolution, LTE) system, or other wireless communications systems using various radio access technologies, for example, systems using access technologies such as Code Division Multiple Access, Frequency Division Multiple Access, Time Division Multiple Access, orthogonal Frequency Division Multiple Access, and single carrier Frequency Division Multiple Access. In addition, the technology is applicable to a subsequent evolved system for the LTE system, such as a 5th generation 5G system. For clarity, herein, only the LTE system is used as an example for description. A communication link may be set up between the WD and the relay UE based on an LTE protocol, a Bluetooth protocol, a Wi-Fi protocol, or another protocol.

In this application, the nouns "network" and "system" are usually alternately used. However, a person skilled in the art can understand meanings of the nouns. The wearable device related to this application may include various smartphones, smartwatches, cameras, and the like that have a wireless communication function. The relay UE may include various smartphones that have a wireless communication function. The base station (base station, BS) related to the present invention is an apparatus that is deployed in a radio access network and used to provide a wireless communication function for the WD and the relay UE. The base station may include a macro base station, a micro base station, a relay station, an access point, and the like in various forms. In systems using different radio access technologies, devices with a function of a base station may have different names. For example, the device is referred to as an evolved node B (evolved NodeB, eNB or eNodeB for short) in an LTE network, and the device is referred to as a node B (Node B) in a 3rd generation 3G network, and so on. For ease of description, in this application, the foregoing apparatuses that provide a wireless communication function for the WD and the relay UE are collectively referred to as a base station or a BS.

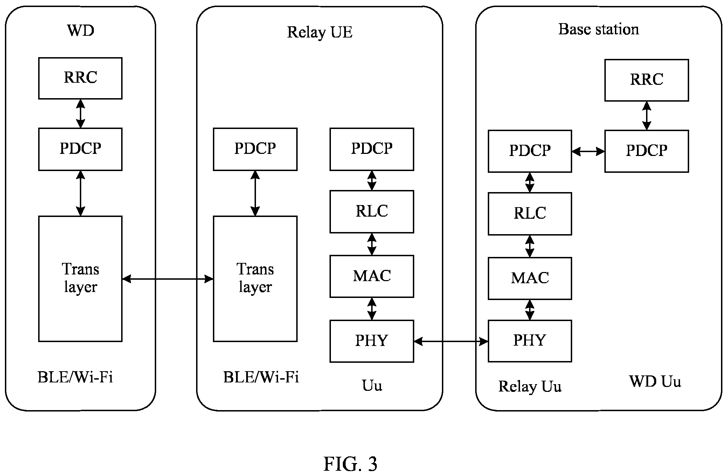

To implement a secure connection between the WD and the relay UE and reduce complexity and processing load of the relay UE in message processing, a control plane protocol stack shown in FIG. 3 is used in the embodiments of the present invention. The protocol stack can support a secure end-to-end connection. When the WD is connected to the network side by using the relay UE, the eNB directly controls an RRC connection initiated by the WD.

The following further describes the embodiments of the present invention in detail based on common aspects of the foregoing designs described in the present invention.

An embodiment of the present invention provides a method for configuring a radio bearer for a wearable device and provides a base station, relay UE, and the WD that are based on the method. The base station sends a first message to the relay UE, where the first message includes first radio bearer configuration information. In this embodiment of the present invention, the first radio bearer configuration information is used by the relay UE to configure radio bearers for the WD on interfaces of the relay UE, so that a message subsequently sent by the WD is transparently transmitted to the base station. After the configuration is complete, the relay UE sends a first complete message to the base station. After receiving the first complete message, the base station sends a second message to the WD. The second message includes second radio bearer configuration information. In this embodiment of the present invention, the second radio bearer configuration information is used by the WD to configure a radio bearer on an interface of the WD. After the WD configures the radio bearer on the interface of the WD, a message subsequently sent by the WD can be first transmitted to the relay UE. Because the relay UE has also configured the radio bearers on the interfaces of the relay UE, the relay UE can transparently transmit, to the base station, the message sent by the WD. After configuring the radio bearer on the interface of the WD, the WD sends a second complete message to the base station. After receiving the second complete message, the base station determines that a link between the base station and the WD is set up, and sets up a wireless connection to the WD by using the relay UE.

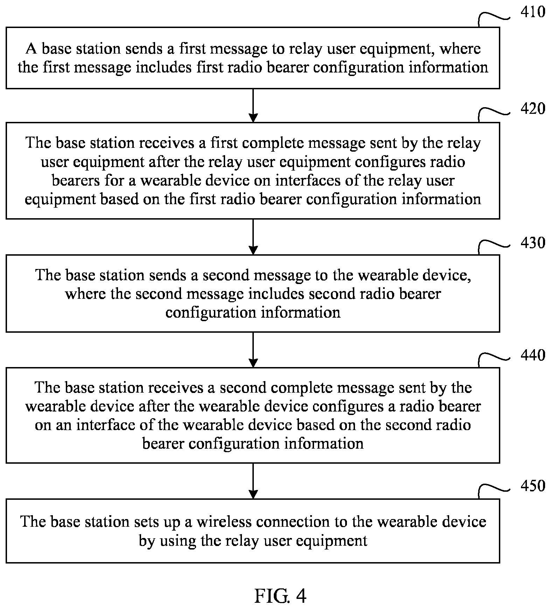

The following describes, with reference to FIG. 4, a solution provided in an embodiment of the present invention. FIG. 4 shows a method for configuring a radio bearer for a wearable device according to an embodiment of the present invention. The method is executed by a base station and specifically includes the following steps.

Step 410. The base station sends a first message to relay user equipment, where the first message includes first radio bearer configuration information.

Specifically, the base station sends the first message to the relay UE. The first message includes the first radio bearer configuration information.

In this embodiment of the present invention, the first message is specifically an RRC connection reconfiguration (RRC connection reconfiguration) message. In other words, the RRC connection reconfiguration message includes the first radio bearer configuration information.

The first radio bearer configuration information includes a first configuration policy. The first configuration policy is used to instruct the relay UE to configure radio bearers for the WD on a Uu interface and a radio interface of the relay UE, so that the radio interface of the relay UE bears a message transmitted on a signaling radio bearer (Signaling Radio bearer, SRB) or a data radio bearer (Data Radio bearer, DRB) of the WD, and the message transmitted on the SRB or the DRB of the WD is transparently transmitted to the base station by using the Uu interface. Step 420. The base station receives a first complete message sent by the relay user equipment after the relay user equipment configures radio bearers for the wearable device on interfaces of the relay user equipment based on the first radio bearer configuration information.

Specifically, the relay UE receives the RRC connection reconfiguration message sent by the base station, obtains the first configuration policy from the RRC connection reconfiguration message, and configures the radio bearers on the Uu interface and the radio interface of the relay UE based on the configuration policy.

Further, that the first configuration policy instructs the relay UE to configure a radio bearer for the WD on a radio interface of the relay UE specifically includes: instructing the relay UE to set up an SRB or a DRB on the radio interface.

That the first configuration policy instructs the relay UE to configure a radio bearer for the WD on a Uu interface of the relay UE specifically includes: instructing the relay UE to set up a first DRB on the Uu interface, where the first DRB bears the message transmitted on the SRB or the DRB of the WD; or
instructing the relay UE to use a second DRB that has been set up on the Uu interface, to bear the message transmitted on the SRB or the DRB of the WD; or
instructing the relay UE to use an SRB that has been set up on the Uu interface, to bear the message transmitted on the SRB of the WD.

It can be understood that LTE radio bearers are classified into two categories: an SRB and a DRB. The SRB is defined as a radio bearer used to transmit an RRC message and a non-access stratum (Non-Access-Stratum, NAS) message. The following three types of SRBs are further defined for the SRB:
SRB 0: Used to transmit an RRC message by using a logical channel: a common control channel (Common Control Channel, CCCH).
SRB 1: Used to transmit an RRC message (the RRC message may include a carried NAS message) by using a logical channel: a dedicated control channel (Dedicated Control Channel, DCCH) and used to transmit a NAS message before an SRB 2 is set up.
SRB 2: Used to transmit, by using a logical channel: a DCCH, a NAS message and an RRC message that includes log measurement information. The SRB 1 takes precedence over the SRB 2.
DRB: Used to transmit, between UE and one or more eNBs, a packet from an evolved packet system (Evolved Packet System, EPS) bearer. When there is one DRB, a one-to-one mapping relationship exists between the DRB and the EPS bearer or an evolved radio access bearer (Evolved Radio Access Bearer, E-RAB).

It should be noted that, in this embodiment of the present invention, the relay UE has two interfaces: One is the radio interface used for message transmission between the relay UE and the WD, and the other is the Uu interface used for message transmission between the relay UE and the base station. When performing interface configuration, the relay UE separately performs configuration for the foregoing two interfaces, and stores a mapping relationship between the radio bearers on the two interfaces, so that each message is transmitted on a corresponding radio bearer in subsequent message transmission.

In this embodiment of the present invention, the Uu interface is used as an example. The Uu interface may have a plurality of SRBs or DRBs, and the SRBs or DRBs can bear different messages.

The relay UE sends the first complete message to the base station after configuring the radio bearers on the Uu interface and the radio interface of the relay UE.

In this embodiment of the present invention, the first complete message is specifically an RRC connection reconfiguration complete (RRC connection reconfiguration complete) message.

Step 430. The base station sends a second message to the wearable device, where the second message includes second radio bearer configuration information.

Specifically, after receiving the RRC connection reconfiguration complete sent by the relay UE, the base station determines that the relay UE has completed configuration of the radio bearers on the interfaces of the relay UE. The base station sends the second message to the WD. The second message includes the second radio bearer configuration information.

In this embodiment of the present invention, the second message is specifically an RRC connection setup (RRC connection setup) message or an RRC connection reconfiguration (RRC connection reconfiguration) message. In other words, the RRC connection setup message or the RRC connection reconfiguration message includes the second radio bearer configuration information.

The second radio bearer configuration information includes a second configuration policy. The second configuration policy is used by the WD to configure an SRB or a DRB on a radio interface of the WDz.

Step 440. The base station receives a second complete message sent by the wearable device after the wearable device configures a radio bearer on an interface of the wearable device based on the second radio bearer configuration information.

Specifically, the WD receives the RRC connection setup message or the RRC connection reconfiguration message sent by the base station, obtains the second configuration policy from the RRC connection setup message or the RRC connection reconfiguration message, and configures the radio bearer on the radio interface of the WD based on the configuration policy. Further, the WD configures the SRB or the DRB on the radio interface of the WD based on the second configuration policy and sets up a radio interface connection to the relay UE. Because the base station is unclear about a wireless connection protocol between the WD and the relay UE, the second configuration policy sent by the base station does not carry Bluetooth low energy (Bluetooth Low Energy, BLE)/Wi-Fi wireless connection configuration information. In this case, when the WD sets up a wireless connection to the relay UE by using Bluetooth low energy (Bluetooth Low Energy, BLE)/Wi-Fi, the WD needs to configure a BLE/Wi-Fi interface corresponding to the SRB or the DRB and a corresponding link, and the WD is connected to the relay UE by using the BLE/Wi-Fi interface.

The WD sends the second complete message to the base station after configuring the radio bearer on the radio interface of the WD.

In this embodiment of the present invention, the WD sends a different second complete message based on a different second message. When the second message is the RRC connection setup message, the second complete message sent by the WD is an RRC connection setup complete (RRC connection setup complete) message. When the second message is the RRC connection reconfiguration, the second complete message sent by the WD is an RRC connection reconfiguration complete message.

Step 450. The base station sets up a wireless connection to the wearable device by using the relay user equipment.

Specifically, after the relay UE and the WD configure the radio bearers on the interfaces of the relay UE and the WD according to the configuration in steps 410 to 450, the base station and the WD can transmit messages to each other by using the relay UE.

Optionally, before step 410 in this embodiment of the present invention, different steps are performed between the base station and the relay UE and between the base station and the WD based on different cases.

In a first case, the base station receives a third message sent by the WD by using a cellular link. The third message includes attribute information of the relay UE. The relay UE is relay UE to which the WD subsequently sets up a radio interface connection. In this embodiment of the present invention, the third message is specifically an RRC connection request (RRC connection request) message. The attribute information of the relay UE may include identification information of the relay UE. The base station determines the relay UE based on the attribute information of the relay UE.

The base station determines, based on the attribute information of the relay UE, whether context information of the relay UE is stored. The context information specifically includes configuration information, bearer information, and the like of the relay UE. When the context information of the relay UE is not stored on the base station, the base station sends the attribute information of the relay UE to an MME. After receiving the attribute information of the relay UE, the MME determines whether the relay UE is in an RRC_idle (RRC_Idle) mode. If the relay UE is in the RRC idle mode, the MME sends a paging message to the base station. The base station forwards the paging message to the relay UE, to trigger the relay UE to set up an RRC connection to the base station.

The relay UE sends an RRC connection request (RRC connection request) message to the base station. The base station feeds back an RRC connection setup message to the relay UE based on the RRC connection request message. The relay UE sets up the RRC connection to the base station based on the RRC connection setup message, and sends an RRC connection setup complete message to the base station, so that an RRC connection is set up between the base station and the relay UE.

In a second case, before the base station receives a third message sent by the WD by using a cellular link, a step in which the base station sets up an RRC connection to the WD by using the cellular link is further included. In other words, first, the base station sets up the RRC connection to the WD by using the cellular link, and then the WD sends the third message to the base station by using the cellular link. A subsequent step is the same as that in the first case. Details are not described herein again.

In a third case, an MME sends an E-RAB setup message to the base station, and the base station sends the first message to the relay UE based on the E-RAB setup message.

In a fourth case, the relay UE sets up a radio interface connection to the WD. The radio interface includes a BLE interface, a Wi-Fi interface, or a PC5 interface. The relay UE receives, by using the radio interface connection that is set up, an RRC connection request message sent by the WD. The relay UE sets up an SRB on the Uu interface of the relay UE based on the RRC connection request message sent by the WD. The SRB is used to bear the RRC connection request message when the relay UE subsequently forwards, to the base station, the RRC connection request message sent by the WD.

The relay UE determines whether the relay UE is in an RRC idle mode. When the relay UE is in the idle mode, the relay UE triggers, based on the RRC connection request message sent by the WD, the relay UE to set up an RRC connection to the base station. It can be understood that the RRC connection setup between the relay UE and the base station is described in detail in the first case. Details are not described herein again.

The relay UE forwards, to the base station by using the SRB or a DRB that has been set up on the Uu interface, the RRC connection request message sent by the WD. The base station sends the first message to the relay UE based on the RRC connection request message forwarded by the relay UE.

It should be noted that, because the relay UE also needs to send an RRC connection request to the base station when triggering the relay UE to set up the RRC connection to the base station, the relay UE adds identification information of the WD to the forwarded RRC connection request when forwarding the RRC connection request sent by the WD, so that the base station can distinguish between the two received RRC connection requests based on the identification information.

Optionally, in step 430 in this embodiment of the present invention, the base station sends the second message by using different links based on the foregoing different cases.

Specifically, in the first case and the second case, because no radio interface connection is set up between the WD and the relay UE when the base station sends the second message to the WD, the base station may send the second message to the WD by using the cellular link; in the third case and the fourth case, because the WD first sets up the radio interface connection to the relay UE, the base station may send the second message to the WD by using a relay link (that is, the radio interface connection that is set up between the relay UE and the WD).

Therefore, when the method for configuring a radio bearer for a wearable device provided in this embodiment of the present invention is applied, the base station can separately configure the radio bearers on the interfaces of the relay UE and the interface of the WD based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

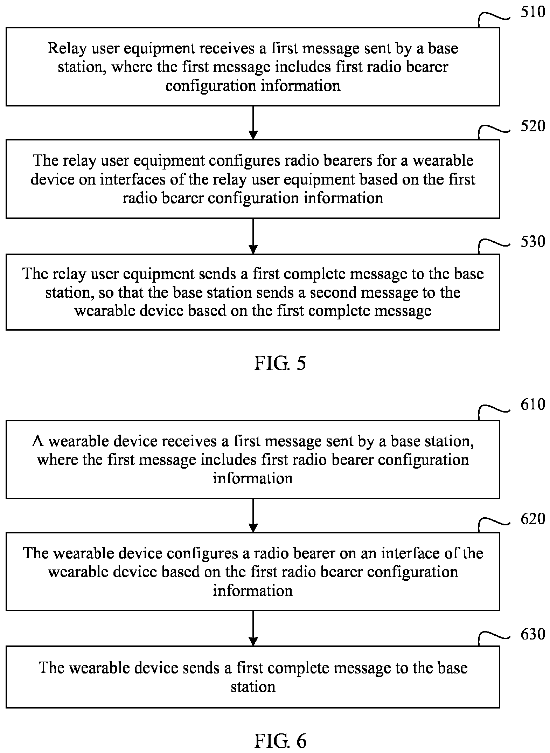

The following describes, with reference to FIG. 5, a solution provided in an embodiment of the present invention. FIG. 5 is a method for configuring a radio bearer for a wearable device according to an embodiment of the present invention. The method is executed by relay UE and specifically includes the following steps.

Step 510. Receive a first message sent by a base station, where the first message includes first radio bearer configuration information.

Specifically, the base station sends the first message to the relay UE. The first message includes the first radio bearer configuration information.

It can be understood that the first message and the first radio bearer configuration information are described in detail in the foregoing embodiment. Details are not described herein again.

Step 520. The relay user equipment configures radio bearers for the wearable device on interfaces of the relay user equipment based on the first radio bearer configuration information. Specifically, the relay UE receives the first message sent by the base station, obtains a first configuration policy from the first message, and configures the radio bearers on a Uu interface and a radio interface of the relay UE based on the configuration policy.

It can be understood that, a process in which the relay UE configures the radio bearers on the Uu interface and the radio interface is described in detail in the foregoing embodiment. Details are not described herein again.

Step 530. The relay user equipment sends a first complete message to the base station, so that the base station sends a second message to the wearable device based on the first complete message. Specifically, the relay UE sends the first complete message to the base station after configuring the radio bearers on the Uu interface and the radio interface of the relay UE.

The base station sends the second message to the WD based on the first complete message.

It can be understood that the first complete message is described in detail in the foregoing embodiment. Details are not described herein again.

Optionally, before step 510 in this embodiment of the present invention, different steps are performed between the relay UE and the base station and between the relay UE and the WD based on different cases.

In a first case, when context information of the relay UE is not stored on the base station, the base station sends attribute information of the relay UE to an MME. After receiving the attribute information of the relay UE, the MME determines whether the relay UE is in an RRC_idle mode. If the relay UE is in the RRC idle mode, the MME sends a paging message to the base station. The base station forwards the paging message to the relay UE, and the relay UE triggers, based on the paging message, the relay UE to set up an RRC connection to the base station.

It can be understood that the RRC connection setup between the relay UE and the base station is described in detail in the foregoing embodiment. Details are not described herein again.

In a second case, the relay UE sets up a radio interface connection to the WD. The radio interface includes a BLE interface, a Wi-Fi interface, or a PC5 interface. The relay UE receives, by using the radio interface connection that is set up, an RRC connection request message sent by the WD.

The relay UE sets up an SRB on the Uu interface of the relay UE based on the RRC connection request message sent by the WD. The SRB is used to bear the RRC connection request message when the relay UE subsequently forwards, to the base station, the RRC connection request message sent by the WD.

The relay UE determines whether the relay UE is in an RRC_idle mode. When the relay UE is in the idle mode, the relay UE triggers, based on the RRC connection request message sent by the WD, the relay UE to set up an RRC connection to the base station. It can be understood that the RRC connection setup between the relay UE and the base station is described in detail in the first case. Details are not described herein again.

In this embodiment of the present invention, the relay UE may trigger, in the following two manners based on the RRC connection request message sent by the WD, the relay UE to set up the RRC connection to the base station.

Specifically, in a first manner, the RRC connection request message sent by the WD is processed in the relay UE by a BLE/Wi-Fi/PC5 radio interface and then reaches an RRC layer in the relay UE. The RRC layer parses the RRC connection request from the WD, and then the RRC layer triggers, based on a current mode of the relay UE (if the relay UE is currently in the RRC_idle mode), the relay UE to set up the RRC connection to the base station.

In a second manner, after the RRC connection request message sent by the WD is processed in the relay UE by a BLE/Wi-Fi/PC5 radio interface, the radio interface transmits the RRC connection request message to a Packet Data Convergence Protocol (Packet Data Convergence Protocol, PDCP) stack for processing, the PDCP protocol stack sends an indication notification to an RRC layer of the Uu interface, and the RRC layer triggers, based on a current mode of the relay UE (if the relay UE is currently in the RRC_idle mode), the relay UE to set up the RRC connection to the base station.

The relay UE forwards, to the base station by using the SRB or a DRB that has been set up on the Uu interface, the RRC connection request message sent by the WD. The base station sends the first message to the relay UE based on the RRC connection request message forwarded by the relay UE.

It should be noted that, because the relay UE also needs to send an RRC connection request to the base station when triggering the relay UE to set up the RRC connection to the base station, the relay UE adds identification information of the WD to the forwarded RRC connection request when forwarding the RRC connection request sent by the WD, so that the base station can distinguish between the two received RRC connection requests based on the identification information.

In this embodiment of the present invention, the first case is corresponding to the first case in the foregoing embodiment, and the second case is corresponding to the fourth case in the foregoing embodiment.

Optionally, after step 530 in this embodiment of the present invention, a step in which the relay UE sets up a radio interface connection to the WD is further included. With this step, the WD communicates with the base station by using the radio interface connection that is set up.

The method further includes: The relay UE sets up the radio interface connection to the WD after the WD configures a radio bearer on a radio interface of the WD based on the second message.

Specifically, the WD configures an SRB or a DRB on the radio interface of the WD and sets up the radio interface connection to the relay UE. Because the base station is unclear about a wireless connection protocol between the WD and the relay UE, a second configuration policy sent by the base station does not carry BLE/Wi-Fi wireless connection configuration information. In this case, when the WD sets up a wireless connection to the relay UE by using BLE/Wi-Fi, the WD needs to configure a BLE/Wi-Fi interface corresponding to the SRB or the DRB and a corresponding link, and the WD is connected to the relay UE by using the BLE/Wi-Fi interface. Therefore, when the method for configuring a radio bearer for a wearable device provided in this embodiment of the present invention is applied, the base station can separately configure the radio bearers on the interfaces of the relay UE based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

The following describes, with reference to FIG. 6, a solution provided in an embodiment of the present invention. FIG. 6 is a method for configuring a radio bearer for a wearable device according to an embodiment of the present invention. The method is executed by a WD and specifically includes the following steps.

Step 610. The wearable device receives a first message sent by a base station, where the first message includes first radio bearer configuration information.

Specifically, the base station sends the first message to the WD. The first message includes the first radio bearer configuration information.

It can be understood that the first message and the first radio bearer configuration information are described in detail in the foregoing embodiment. Details are not described herein again.

In this embodiment of the present invention, the first message is corresponding to the second message in the foregoing embodiment, and the first radio bearer configuration information is corresponding to the second radio bearer configuration information in the foregoing embodiment.

Step 620. The wearable device configures a radio bearer on an interface of the wearable device based on the first radio bearer configuration information.

Specifically, the WD receives the first message sent by the base station, obtains a first configuration policy from the first message, and configures the radio bearer on a radio interface of the WD based on the configuration policy.

It can be understood that a process in which the WD configures the radio bearer on the radio interface is described in detail in the foregoing embodiment. Details are not described herein again.

Step 630. The wearable device sends a first complete message to the base station.

Specifically, the WD sends the first complete message to the base station after configuring the radio bearer on the radio interface of the WD.

The base station sets up a wireless connection to the WD based on the first complete message by using the relay UE.

It can be understood that the first complete message is described in detail in the foregoing embodiment. Details are not described herein again.

In this embodiment of the present invention, the first complete message is corresponding to the second complete message in the foregoing embodiment.

Optionally, before step 610 in this embodiment of the present invention, different steps are performed between the WD and the base station and between the WD and the relay UE based on different cases.

In a first case, the WD sends a second message to the base station by using a cellular link. The second message includes attribute information of relay UE that is subsequently connected to the WD, and the attribute information of the relay UE is used to enable the base station to initiate paging to the relay UE.

It can be understood that, that the WD sends the second message to the base station by using the cellular link is described in detail in the foregoing embodiment. Details are not described herein again.

In this embodiment of the present invention, the second message is corresponding to the third message in the foregoing embodiment.

In a second case, before the WD sends a second message to the base station by using a cellular link, a step in which the WD sets up an RRC connection to the base station by using the cellular link is further included. In other words, first, the base station sets up the RRC connection to the WD by using the cellular link, and then the WD sends the second message to the base station by using the cellular link. A subsequent step is the same as that in the first case. Details are not described herein again.

In a third case, the WD sets up a radio interface connection to the relay UE. The radio interface includes a BLE interface, a Wi-Fi interface, or a PC5 interface. The WD sends an RRC connection request message to the relay UE by using the radio interface connection that is set up. The RRC connection request message is used to enable the relay UE to set up an SRB on a Uu interface of the relay UE and set up an RRC connection to the base station, and the SRB that is set up is used to bear the RRC connection request message.

It can be understood that, that the WD sets up the radio interface connection to the relay UE and sends the RRC connection request message to the relay UE is described in detail in the foregoing embodiment. Details are not described herein again.

In this embodiment of the present invention, the first case is corresponding to the first case in the foregoing embodiment, the second case is corresponding to the second case in the foregoing embodiment, and the third case is corresponding to the fourth case in the foregoing embodiment. Optionally, in step 610 in this embodiment of the present invention, the WD receives, by using different links based on the foregoing different cases, the first message sent by the base station. Specifically, in the first case and the second case, because no radio interface connection is set up between the WD and the relay UE when the base station sends the first message to the WD, the WD may receive, by using the cellular link, the first message sent by the base station; in the third case, because the WD first sets up the radio interface connection to the relay UE, the WD may receive, by using a relay link (that is, the radio interface connection that is set up between the relay UE and the WD), the first message sent by the base station.

Optionally, before step 630 in this embodiment of the present invention, a step in which the WD sets up a radio interface connection to the relay UE is further included. With this step, the WD communicates with the base station by using the radio interface connection that is set up. Specifically, the WD configures an SRB or a DRB on the radio interface of the WD and sets up the radio interface connection to the relay UE. Because the base station is unclear about a wireless connection protocol between the WD and the relay UE, a second configuration policy sent by the base station does not carry BLE/Wi-Fi wireless connection configuration information. In this case, when the WD sets up a wireless connection to the relay UE by using BLE/Wi-Fi, the WD needs to configure a BLE/Wi-Fi interface corresponding to the SRB or the DRB and a corresponding link, and the WD is connected to the relay UE by using the BLE/Wi-Fi interface.

Further, in step 630 in this embodiment of the present invention, the WD sends the first complete message to the base station by using the radio interface connection that is set up.

Therefore, when the method for configuring a radio bearer for a wearable device provided in this embodiment of the present invention is applied, the base station can separately configure the radio bearer on the interface of the WD based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

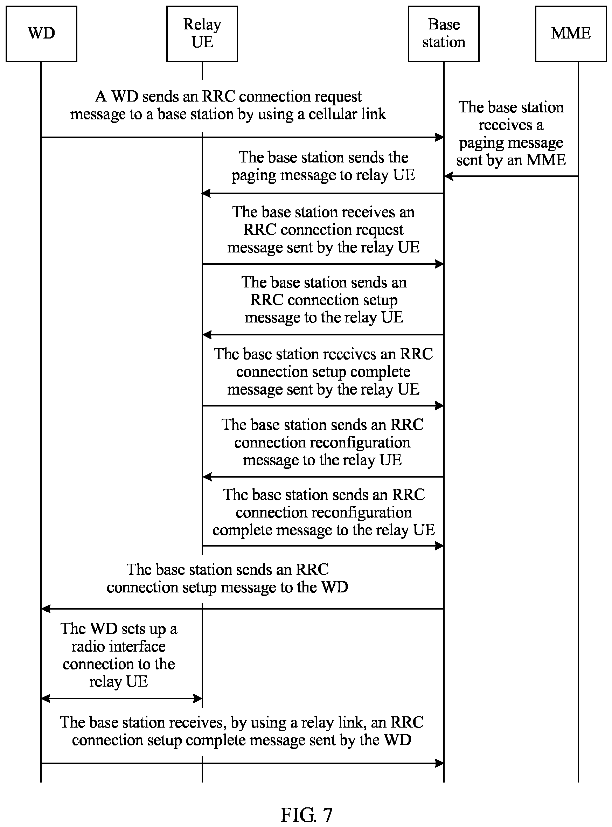

In the foregoing embodiment, four cases that appear when a radio bearer is configured for the WD are described. The following describes the solutions provided in the embodiments of the present invention with reference to FIG. 7 to FIG. 10. FIG. 7 to FIG. 10 are time sequence diagrams of four methods for configuring a radio bearer for a wearable device according to embodiments of the present invention. As shown in FIG. 7, FIG. 7 shows an RRC connection setup process for a WD. Specifically, the following steps are included.

Step 700. The WD sends an RRC connection request message to a base station by using a cellular link.

Specifically, the WD sends the RRC connection request message to the base station by using the cellular link. The RRC connection request message includes attribute information of relay UE. The relay UE is relay UE to which the WD subsequently sets up a radio interface connection. Step 701. The base station receives a paging message sent by an MME.

Specifically, the base station determines the relay UE based on the attribute information of the relay UE and determines whether context information of the relay UE is stored. The context information specifically includes configuration information, bearer information, and the like of the relay UE. When the context information of the relay UE is not stored on the base station, the base station sends the attribute information of the relay UE to the MME. After receiving the attribute information of the relay UE, the MME determines whether the relay UE is in an RRC_idle mode. If the relay UE is in the RRC_idle mode, the MME sends the paging message to the base station.

Step 702. The base station sends the paging message to the relay UE.

Specifically, the base station forwards the paging message to the relay UE, to trigger the relay UE to set up an RRC connection to the base station.

Step 703. The base station receives an RRC connection request message sent by the relay UE.

Step 704. The base station sends an RRC connection setup message to the relay UE.

Step 705. The base station receives an RRC connection setup complete message sent by the relay UE.

Specifically, step 703 to step 705 are a process in which the relay UE sets up the RRC connection request to the base station. Because the process is described in detail in the foregoing embodiment, details are not described herein again.

Step 706. The base station sends an RRC connection reconfiguration message to the relay UE.

Specifically, after the base station sets up the RRC connection to the relay UE, the base station sends the RRC connection reconfiguration message to the relay UE. The RRC connection reconfiguration message includes first radio bearer configuration information. The first radio bearer configuration information includes a first configuration policy. The first configuration policy is used to instruct the relay UE to configure radio bearers for the WD on a Uu interface and a radio interface of the relay UE, so that the radio interface of the relay UE bears a message transmitted on an SRB or a DRB of the WD, and the message transmitted on the SRB or the DRB of the WD is transparently transmitted to the base station by using the Uu interface.

The first radio bearer configuration information and the first configuration policy included in the first radio bearer configuration information are described in detail in the foregoing embodiment. Details are not described herein again.

Step 707. The base station receives an RRC connection reconfiguration complete message sent by the relay UE.

Specifically, the relay UE receives the RRC connection reconfiguration message sent by the base station, obtains the first configuration policy from the RRC connection reconfiguration message, and configures the radio bearers on the Uu interface and the radio interface of the relay UE based on the configuration policy.

In this embodiment of the present invention, the relay UE configures a DRB on the Uu interface and configures an SRB 1 on the radio interface based on the first configuration policy, so that a message sent on an SRB 1 of the WD can be subsequently borne on the Uu interface.

In addition, the relay UE further stores a mapping relationship between the radio bearers on the two interfaces, so that each message is transmitted on a corresponding radio bearer in subsequent message transmission.

After the configuration is complete, the relay UE sends the RRC connection reconfiguration complete message to the base station.

Step 708. The base station sends an RRC connection setup message to the WD by using the cellular link.

Specifically, after receiving the RRC connection reconfiguration complete sent by the relay UE, the base station determines that the relay UE has completed configuration of the radio bearers on the interfaces of the relay UE. The base station sends the RRC connection setup message to the WD by using the cellular link. The RRC connection setup message includes second radio bearer configuration information, and the second radio bearer configuration information includes a second configuration policy. The second configuration policy is used by the WD to configure an SRB on a radio interface of the WD.

The second radio bearer configuration information and the second configuration policy included in the second radio bearer configuration information are described in detail in the foregoing embodiment. Details are not described herein again.

Step 709. The WD sets up a radio interface connection to the relay UE.

Specifically, the WD receives the RRC connection setup message sent by the base station, obtains the second configuration policy from the RRC connection setup message, and configures the radio bearer on the radio interface of the WD based on the configuration policy.

In this embodiment of the present invention, the WD configures the SRB 1 on the radio interface of the WD based on the second configuration policy and sets up the radio interface connection to the relay UE. Because the base station is unclear about a wireless connection protocol between the WD and the relay UE, the second configuration policy sent by the base station does not carry BLE/Wi-Fi wireless connection configuration information. In this case, when the WD sets up a wireless connection to the relay UE by using BLE/Wi-Fi, the WD needs to configure a BLE/Wi-Fi interface corresponding to the SRB 1 and a corresponding link, and the WD is connected to the relay UE by using the BLE/Wi-Fi interface.

Step 710. The base station receives, by using a relay link, an RRC connection setup complete message sent by the WD.

Specifically, after configuring the radio bearer on the radio interface of the WD, the WD sends the RRC connection setup complete message to the base station by using the relay link.

After the relay UE and the WD configure the radio bearers on the interfaces of the relay UE and the WD according to the configuration in steps 706 to 709, the base station and the WD can transmit messages to each other by using the relay UE.

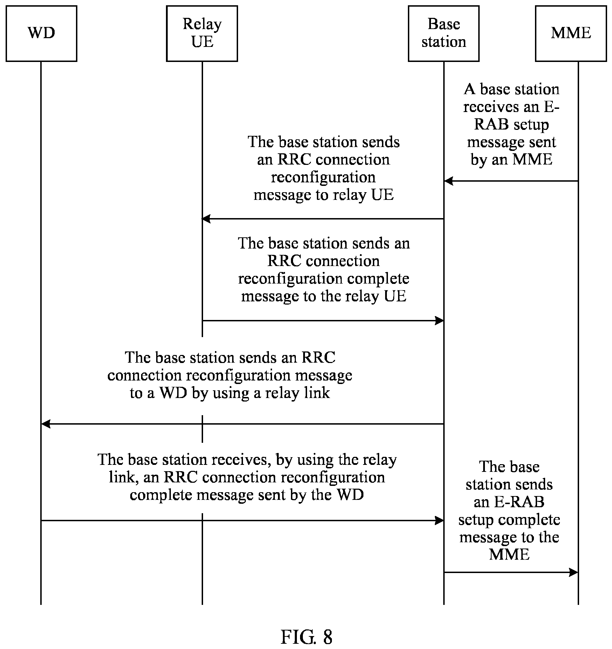

The following describes, with reference to FIG. 8, a solution provided in an embodiment of the present invention. As shown in FIG. 8, FIG. 8 shows an RRC connection reconfiguration process for a WD. It can be understood that the RRC connection reconfiguration process for the WD is a step performed after a process in which an RRC connection of the WD is set up according to FIG. 7. Specifically, the following steps are included.

Step 800. Abase station receives an E-RAB setup message sent by an MME.

Step 801. The base station sends an RRC connection reconfiguration message to relay UE. Specifically, the base station sends the RRC connection reconfiguration message to the relay UE based on the received E-RAB setup message. The RRC connection reconfiguration message includes first radio bearer configuration information. The first radio bearer configuration information includes a first configuration policy. The first configuration policy is used to instruct the relay UE to configure radio bearers for the WD on a Uu interface and a radio interface of the relay UE, so that the radio interface of the relay UE bears a message transmitted on an SRB or a DRB of the WD, and the message transmitted on the SRB or the DRB of the WD is transparently transmitted to the base station by using the Uu interface.

The first radio bearer configuration information and the first configuration policy included in the first radio bearer configuration information are described in detail in the foregoing embodiment. Details are not described herein again.

Step 802. The base station receives an RRC connection reconfiguration complete message sent by the relay UE.

Specifically, the relay UE receives the RRC connection reconfiguration message sent by the base station, obtains the first configuration policy from the RRC connection reconfiguration message, and configures the radio bearers on the Uu interface and the radio interface of the relay UE based on the configuration policy.

In this embodiment of the present invention, the relay UE configures a DRB on the Uu interface and configures an SRB 2 and a DRB on the radio interface based on the first configuration policy, so that a message sent on an SRB 2 and a DRB of the WD can be subsequently borne on the Uu interface.

In addition, the relay UE further stores a mapping relationship between the radio bearers on the two interfaces, so that each message is transmitted on a corresponding radio bearer in subsequent message transmission.

After the configuration is complete, the relay UE sends the RRC connection reconfiguration complete message to the base station.

Step 803. The base station sends an RRC connection reconfiguration message to the WD by using a relay link.

Specifically, after receiving the RRC connection reconfiguration complete sent by the relay UE, the base station determines that the relay UE has completed configuration of the radio bearers on the interfaces of the relay UE. The base station sends the RRC connection reconfiguration message to the WD by using the relay link. The RRC connection reconfiguration message includes second radio bearer configuration information, and the second radio bearer configuration information includes a second configuration policy. The second configuration policy is used by the WD to configure an SRB or a DRB on a radio interface of the WD.

The second radio bearer configuration information and the second configuration policy included in the second radio bearer configuration information are described in detail in the foregoing embodiment. Details are not described herein again.

Step 804. The base station receives, by using the relay link, an RRC connection reconfiguration complete message sent by the WD.

Specifically, the WD receives the RRC connection reconfiguration message sent by the base station, obtains the second configuration policy from the RRC connection reconfiguration message, and configures the radio bearer on the radio interface of the WD based on the configuration policy.

In this embodiment of the present invention, the WD configures the SRB 2 or the DRB on the radio interface of the WD based on the second configuration policy. Because the base station is unclear about a wireless connection protocol between the WD and the relay UE, the second configuration policy sent by the base station does not carry BLE/Wi-Fi wireless connection configuration information. In this case, when the WD sets up a wireless connection to the relay UE by using BLE/Wi-Fi, the WD needs to configure a BLE/Wi-Fi interface corresponding to the SRB 2 or the DRB and a corresponding link.

After configuring the radio bearer on the radio interface of the WD, the WD sends the RRC connection reconfiguration complete message to the base station by using the relay link.

Step 805. The base station sends an E-RAB setup complete message to the MME.

Specifically, the base station sends the E-RAB setup complete message to the MME after receiving the RRC connection reconfiguration complete message sent by the WD.

In the RRC connection reconfiguration process for the WD shown in FIG. 8, RRC messages transmitted between the WD and the base station are all transmitted on the radio bearers set up on corresponding interfaces of the WD and the relay UE shown in FIG. 7 described in the foregoing embodiment.

In the processes described in FIG. 7 and FIG. 8, first, the WD sets up a connection to the base station by using the cellular link, and then the base station switches to the relay link to communicate with the WD.

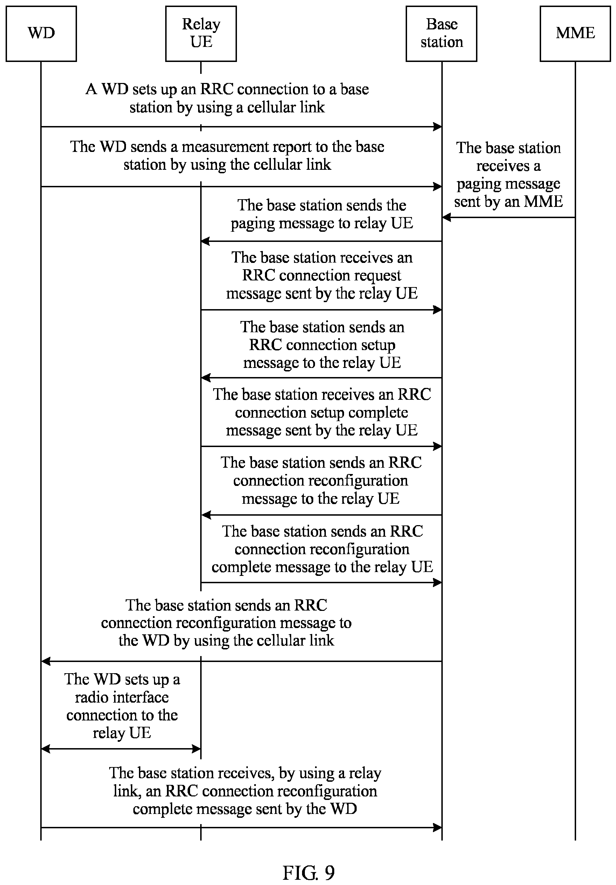

The following describes, with reference to FIG. 9, a solution provided in an embodiment of the present invention. As shown in FIG. 9, FIG. 9 shows a process in which a WD switches from a cellular link to a relay link. It can be understood. Specifically, the following steps are included.

Step 900. Abase station sets up an RRC connection to the WD by using the cellular link.

Step 901. The WD sends a measurement report to the base station by using the cellular link.

Specifically, the WD sends the measurement report to the base station by using the cellular link.

The measurement report includes attribute information of relay UE. The relay UE is relay UE to which the WD subsequently sets up a radio interface connection.

Step 902. The base station receives a paging message sent by an MME.

Specifically, the base station determines the relay UE based on the attribute information of the relay UE and determines whether context information of the relay UE is stored. The context information specifically includes configuration information, bearer information, and the like of the relay UE. When the context information of the relay UE is not stored on the base station, the base station sends the attribute information of the relay UE to the MME. After receiving the attribute information of the relay UE, the MME determines whether the relay UE is in an RRC_idle mode. If the relay UE is in the RRC_idle mode, the MME sends the paging message to the base station.

Step 903. The base station sends the paging message to the relay UE.

Specifically, the base station forwards the paging message to the relay UE, to trigger the relay UE to set up an RRC connection to the base station.

Step 904. The base station receives an RRC connection request message sent by the relay UE. Step 905. The base station sends an RRC connection setup message to the relay UE.

Step 906. The base station receives an RRC connection setup complete message sent by the relay UE.

Specifically, step 904 to step 906 are a process in which the relay UE sets up the RRC connection request to the base station. Because the process is described in detail in the foregoing embodiment, details are not described herein again.

Step 907. The base station sends an RRC connection reconfiguration message to the relay UE.

Specifically, after the base station sets up the RRC connection to the relay UE, the base station sends the RRC connection reconfiguration message to the relay UE. The RRC connection reconfiguration message includes first radio bearer configuration information. The first radio bearer configuration information includes a first configuration policy. The first configuration policy is used to instruct the relay UE to configure radio bearers for the WD on a Uu interface and a radio interface of the relay UE, so that the radio interface of the relay UE bears a message transmitted on an SRB or a DRB of the WD, and the message transmitted on the SRB or the DRB of the WD is transparently transmitted to the base station by using the Uu interface.

The first radio bearer configuration information and the first configuration policy included in the first radio bearer configuration information are described in detail in the foregoing embodiment.

Details are not described herein again.

Step 908. The base station receives an RRC connection reconfiguration complete message sent by the relay UE.

Specifically, the relay UE receives the RRC connection reconfiguration message sent by the base station, obtains the first configuration policy from the RRC connection reconfiguration message, and configures the radio bearers on the Uu interface and the radio interface of the relay UE based on the configuration policy.

In this embodiment of the present invention, the relay UE configures a DRB on the Uu interface and configures an SRB 1, an SRB 2, and a DRB on the radio interface based on the first configuration policy, so that messages sent on an SRB 1, an SRB 2, and a DRB of the WD can be subsequently borne on the Uu interface.

In addition, the relay UE further stores a mapping relationship between the radio bearers on the two interfaces, so that each message is transmitted on a corresponding radio bearer in subsequent message transmission.

After the configuration is complete, the relay UE sends the RRC connection reconfiguration complete message to the base station.

It should be noted that a third indication configuration manner included in the first configuration policy in the foregoing embodiment can be used to transmit only a message borne on the SRB 1 or the SRB 2 on a radio interface of the WD.

Step 909. The base station sends an RRC connection reconfiguration message to the WD by using the cellular link.

Specifically, after receiving the RRC connection reconfiguration complete sent by the relay UE, the base station determines that the relay UE has completed configuration of the radio bearers on the interfaces of the relay UE. The base station sends the RRC connection reconfiguration message to the WD by using the cellular link. The RRC connection reconfiguration message includes second radio bearer configuration information, and the second radio bearer configuration information includes a second configuration policy. The second configuration policy is used by the WD to configure an SRB or a DRB on the radio interface of the WD.

The second radio bearer configuration information and the second configuration policy included in the second radio bearer configuration information are described in detail in the foregoing embodiment. Details are not described herein again.

Step 910. The WD sets up a radio interface connection to the relay UE.

Specifically, the WD receives the RRC connection reconfiguration message sent by the base station, obtains the second configuration policy from the RRC connection reconfiguration message, and configures the radio bearer on the radio interface of the WD based on the configuration policy.

In this embodiment of the present invention, the WD configures the SRB 1, the SRB 2, and the DRB on the radio interface of the WD based on the second configuration policy and sets up the radio interface connection to the relay UE. Because the base station is unclear about a wireless connection protocol between the WD and the relay UE, the second configuration policy sent by the base station does not carry BLE/Wi-Fi wireless connection configuration information. In this case, when the WD sets up a wireless connection to the relay UE by using BLE/Wi-Fi, the WD needs to configure a BLE/Wi-Fi interface corresponding to the SRB 1, the SRB 2, and the DRB and a corresponding link, and the WD is connected to the relay UE by using the BLE/Wi-Fi interface.

Step 911. The base station receives, by using the relay link, an RRC connection reconfiguration complete message sent by the WD.

Specifically, after configuring the radio bearer on the radio interface of the WD, the WD sends the RRC connection reconfiguration complete message to the base station by using the relay link. After the relay UE and the WD configure the radio bearers on the interfaces of the relay UE and the WD according to the configuration in steps 907 to 910, the base station and the WD can transmit messages to each other by using the relay UE.

In the process described in FIG. 9, first, the WD sets up the SRB and the DRB on the radio interface of the WD by using the cellular link, and then the base station switches to the relay link to communicate with the WD.

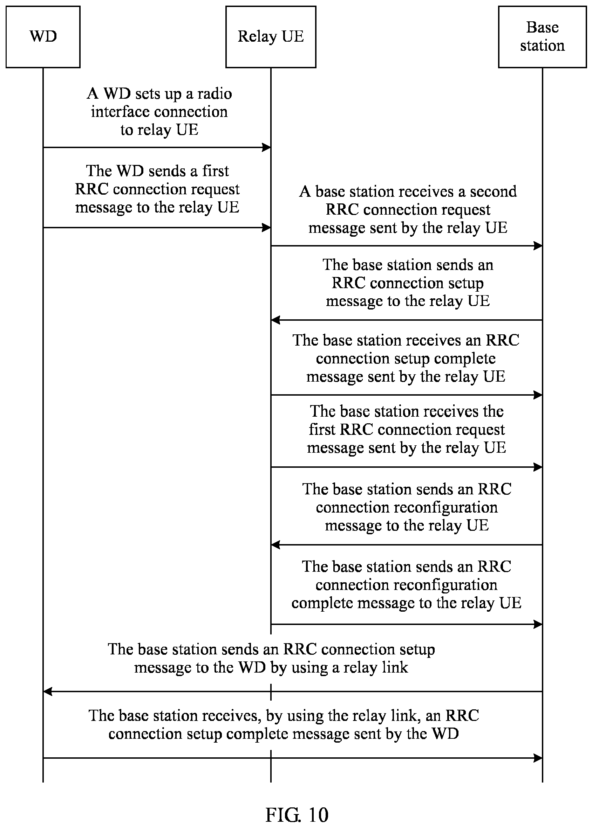

The following describes, with reference to FIG. 10, a solution provided in an embodiment of the present invention. As shown in FIG. 10, FIG. 10 shows another RRC connection setup process for a WD. It can be understood. Specifically, the following steps are included.

Step 1000. Relay UE sets up a radio interface connection to the WD.

Specifically, the relay UE sets up the radio interface connection to the WD. The radio interface includes a BLE interface, a Wi-Fi interface, or a PC5 interface.

Step 1001. When the WD needs to access a network, the WD sends a first RRC connection request message to the relay UE.

Step 1002. A base station receives a second RRC connection request message sent by the relay UE.

Specifically, the relay UE sets up an SRB 0 on a Uu interface of the relay UE based on the first RRC connection request message sent by the WD. The SRB 0 is used to bear the first RRC connection request message when the relay UE subsequently forwards, to the base station, the first RRC connection request message sent by the WD.

The relay UE determines whether the relay UE is in an RRC idle mode. When the relay UE is in the idle mode, the relay UE triggers, based on the first RRC connection request message sent by the WD, the relay UE to set up an RRC connection to the base station.

The relay UE sends the second RRC connection request message to the base station.

It can be understood that, in this step, the relay UE may trigger, in two manners based on the first RRC connection request message sent by the WD, the relay UE to set up the RRC connection to the base station.

Processes in which the relay UE triggers, in the two manners, the relay UE to set up the RRC connection to the base station are described in detail in the foregoing embodiment. Details are not described herein again.

Step 1003. The base station sends an RRC connection setup message to the relay UE.

Step 1004. The base station receives an RRC connection setup complete message sent by the relay UE.

Specifically, step 1002 to step 1004 are a process in which the relay UE sets up the RRC connection request to the base station. Because the process is described in detail in the foregoing embodiment, details are not described herein again.

Step 1005. The base station receives the first RRC connection request message sent by the relay UE.

Specifically, the relay UE forwards, to the base station by using the SRB 0, an SRB 1, or a DRB that has been set up on the Uu interface, the first RRC connection request message sent by the WD.

It should be noted that, because the relay UE also needs to send an RRC connection request to the base station when triggering the relay UE to set up the RRC connection to the base station, the relay UE adds identification information of the WD to the forwarded RRC connection request when forwarding the RRC connection request sent by the WD, so that the base station can distinguish between the two received RRC connection requests based on the identification information.

Step 1006. The base station sends an RRC connection reconfiguration message to the relay UE.

Specifically, the base station sends the RRC connection reconfiguration message to the relay UE based on the first RRC connection request message forwarded by the relay UE. The RRC connection reconfiguration message includes first radio bearer configuration information. The first radio bearer configuration information includes a first configuration policy. The first configuration policy is used to instruct the relay UE to configure radio bearers for the WD on a Uu interface and a radio interface of the relay UE, so that the radio interface of the relay UE bears a message transmitted on an SRB or a DRB of the WD, and the message transmitted on the SRB or the DRB of the WD is transparently transmitted to the base station by using the Uu interface.

The first radio bearer configuration information and the first configuration policy included in the first radio bearer configuration information are described in detail in the foregoing embodiment. Details are not described herein again.

Step 1007. The base station receives an RRC connection reconfiguration complete message sent by the relay UE.

Specifically, the relay UE receives the RRC connection reconfiguration message sent by the base station, obtains the first configuration policy from the RRC connection reconfiguration message, and configures the radio bearers on the Uu interface and the radio interface of the relay UE based on the configuration policy.

In this embodiment of the present invention, the relay UE configures a DRB on the Uu interface and configures an SRB 1 on the radio interface based on the first configuration policy, so that a message sent on an SRB 1 of the WD can be subsequently borne on the Uu interface.

In addition, the relay UE further stores a mapping relationship between the radio bearers on the two interfaces, so that each message is transmitted on a corresponding radio bearer in subsequent message transmission.

After the configuration is complete, the relay UE sends the RRC connection reconfiguration complete message to the base station.

Step 1008. The base station sends an RRC connection setup message to the WD by using a relay link.

Specifically, after receiving the RRC connection reconfiguration complete sent by the relay UE, the base station determines that the relay UE has completed configuration of the radio bearers on the interfaces of the relay UE. The base station sends the RRC connection setup message to the WD by using the relay link (the base station sends the RRC connection setup message to the WD by using an SRB or a DRB that has been set up on a Uu interface). The RRC connection setup message includes second radio bearer configuration information, and the second radio bearer configuration information includes a second configuration policy. The second configuration policy is used by the WD to configure an SRB on a radio interface of the WD.

It should be noted that in this embodiment of the present invention, the base station has a Uu interface connected to the WD, and the base station may set up an SRB or a DRB on the Uu interface, and sends the RRC connection setup message to the WD by using the SRB or the DRB that has been set up on the Uu interface.

The second radio bearer configuration information and the second configuration policy included in the second radio bearer configuration information are described in detail in the foregoing embodiment. Details are not described herein again.

Step 1009. The base station receives, by using the relay link, an RRC connection setup complete message sent by the WD.

Specifically, the WD receives the RRC connection reconfiguration message sent by the base station, obtains the second configuration policy from the RRC connection reconfiguration message, and configures the radio bearer on the radio interface of the WD based on the configuration policy.

In this embodiment of the present invention, the WD configures the SRB 1 on the radio interface of the WD based on the second configuration policy.

After configuring the radio bearer on the radio interface of the WD, the WD sends, by using the relay link, the RRC connection setup complete message to the base station on the SRB 1 that is set up.

It can be understood that, in this embodiment of the present invention, a process in which the WD sets up the SRB 2 or the DRB on the radio interface is the same as the process described in FIG. 8. Details are not described herein again.

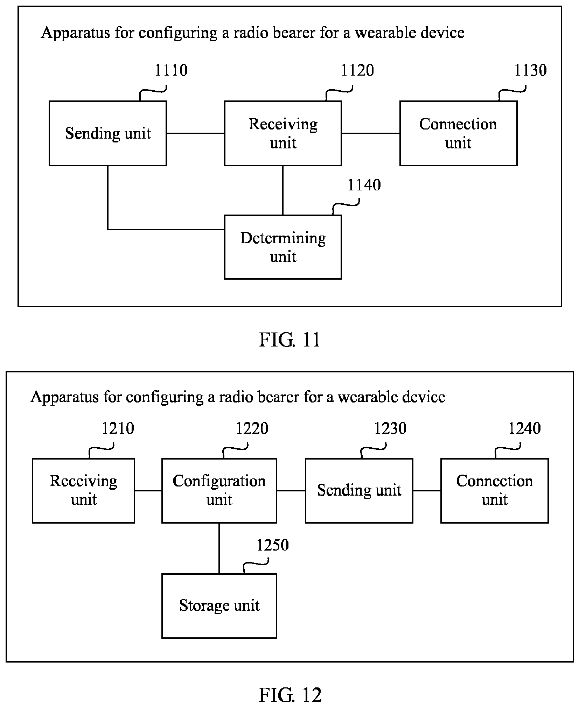

The content described in the foregoing embodiments can implement the method for configuring a radio bearer for a wearable device. Correspondingly, an embodiment of the present invention further provides an apparatus for configuring a radio bearer for a wearable device, to implement the method for configuring a radio bearer for a wearable device provided in the foregoing embodiment. As shown in FIG. 11, the apparatus includes: a sending unit 1110, a receiving unit 1120, and a connection unit 1130.

The sending unit 1110 is configured to send a first message to relay user equipment, where the first message includes first radio bearer configuration information.

The receiving unit 1120 is configured to receive a first complete message sent by the relay user equipment after the relay user equipment configures radio bearers for the wearable device on interfaces of the relay user equipment based on the first radio bearer configuration information.

The sending unit 1110 is further configured to send a second message to the wearable device, where the second message includes second radio bearer configuration information.

The receiving unit 1120 is further configured to receive a second complete message sent by the wearable device after the wearable device configures a radio bearer on an interface of the wearable device based on the second radio bearer configuration information.

The connection unit 1130 is configured to set up a wireless connection to the wearable device by using the relay user equipment.

Further, the receiving unit 1120 is further configured to receive a third message sent by the wearable device by using a cellular link, where the third message includes attribute information of the relay user equipment; and
the apparatus further includes: a determining unit 1140, configured to determine the relay user equipment based on the attribute information of the relay user equipment; and
the sending unit 1110 is further configured to send the attribute information of the relay user equipment to a mobility management entity MME when context information of the relay user equipment is not stored on the apparatus;
the sending unit 1110 is further configured to forward, to the relay user equipment, a paging message sent by the MME when the MME determines that the relay user equipment is in an idle mode;
the receiving unit 1120 is further configured to receive a radio resource control RRC connection request message sent by the relay user equipment based on the paging message; and
the connection unit 1130 is further configured to set up an RRC connection to the relay user equipment based on the RRC connection request message.

Further, the connection unit 1130 is further configured to set up an RRC connection to the wearable device by using the cellular link.

Further, the receiving unit 1120 is further configured to receive an evolved radio access bearer E-RAB setup message sent by an MME; and
the sending unit 1110 is further configured to send the first message to the relay user equipment based on the E-RAB setup message.

Further, the receiving unit 1120 is further configured to receive a first RRC connection request message sent by the relay user equipment;
the connection unit 1130 is further configured to set up an RRC connection to the relay user equipment based on the first RRC connection request message;
the receiving unit 1120 is further configured to receive a second RRC connection request message that is sent by the wearable device and forwarded by the relay user equipment, where the second RRC connection request message is sent by the relay user equipment by using a signaling radio bearer SRB or a data radio bearer DRB on a Uu interface; and
the sending unit 1110 is further configured to send the first message to the relay user
equipment based on the second RRC connection request message.

Further, the first radio bearer configuration information sent by the sending unit 1110 includes a first configuration policy; and
the first configuration policy is used to instruct the relay user equipment to configure the radio bearers for the wearable device on a Uu interface and a radio interface of the relay user equipment, so that the radio interface of the relay user equipment bears a message transmitted on an SRB or a DRB of the wearable device, and the message transmitted on the SRB or the DRB of the wearable device is transparently transmitted to the apparatus by using the Uu interface.

Further, the first configuration policy included in the first radio bearer configuration information sent by the sending unit 1110 specifically includes:
instructing the relay user equipment to set up an SRB or a DRB on the radio interface;
and
the first configuration policy further specifically includes:
   instructing the relay user equipment to set up a first DRB on the Uu interface, where the first DRB bears the message transmitted on the SRB or the DRB of the wearable device; or
   instructing the relay user equipment to use a second DRB that has been set up on the Uu interface, to bear the message transmitted on the SRB or the DRB of the wearable device; or
   instructing the relay user equipment to use an SRB that has been set up on the Uu
   interface, to bear the message transmitted on the SRB of the wearable device. Further, the second radio bearer configuration information sent by the sending unit 1110 includes a second configuration policy; and
   the second configuration policy is used by the wearable device to configure an SRB or a DRB on a radio interface of the wearable device.

Further, the sending unit 1110 is specifically configured to send the second message to the wearable device by using the cellular link.

Further, the sending unit 1110 is specifically configured to send the second message to the wearable device by using a relay link.

Therefore, when the apparatus for configuring a radio bearer for a wearable device provided in this embodiment of the present invention is applied, the base station can separately configure the radio bearers on the interfaces of the relay UE and the interface of the WD based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

The content described in the foregoing embodiments can implement the method for configuring a radio bearer for a wearable device. Correspondingly, an embodiment of the present invention further provides an apparatus for configuring a radio bearer for a wearable device, to implement the method for configuring a radio bearer for a wearable device provided in the foregoing embodiment. As shown in FIG. 12, the apparatus includes: a receiving unit 1210, a configuration unit 1220, and a sending unit 1230.

The receiving unit 1210 is configured to receive a first message sent by a base station, where the first message includes first radio bearer configuration information.

The configuration unit 1220 is configured to configure radio bearers for the wearable device on interfaces of the relay user equipment based on the first radio bearer configuration information. The sending unit 1230 is configured to send a first complete message to the base station, so that the base station sends a second message to the wearable device based on the first complete message.

Further, the receiving unit 1210 is further configured to receive a paging message forwarded by the base station, where the paging message is sent by a mobility management entity MME when the MME determines that the relay user equipment is in an idle mode; and
the sending unit 1230 is further configured to send a radio resource control RRC connection request message to the base station based on the paging message; and the apparatus further includes: a connection unit 1240, configured to set up an RRC connection to the base station.

Further, the connection unit 1240 is further configured to set up a radio interface connection to the wearable device;
the receiving unit 1210 is further configured to receive, by using the radio interface connection that is set up, an RRC connection request message sent by the wearable device;
the configuration unit 1220 is further configured to set up a signaling radio bearer SRB on a Uu interface based on the RRC connection request message, where the SRB is used to bear the RRC connection request message;
the connection unit 1240 is further configured to set up an RRC connection to the base station based on the RRC connection request message when the apparatus is in an idle mode; and
the sending unit 1230 is further configured to forward the RRC connection request message to the base station by using the SRB or a data radio bearer DRB that has been set up on the Uu interface, so that the base station sends the first message to the apparatus based on the RRC connection request message.

Further, the first radio bearer configuration information received by the receiving unit 1210 includes a first configuration policy; and
the configuration unit 1220 is specifically configured to separately configure radio bearers for the wearable device on a Uu interface and a radio interface of the relay user equipment based on the first configuration policy; and
the apparatus further includes: a storage unit 1250, configured to set up and store a mapping relationship between the radio bearer on the Uu interface and the radio bearer on the radio interface.

Further, the configuration unit 1220 is further specifically configured to set up a first DRB on the Uu interface based on the first configuration policy, where the first DRB bears a message transmitted on an SRB or a DRB of the wearable device; or
use, based on the first configuration policy, a second DRB that has been set up on the Uu interface, to bear a message transmitted on an SRB or a DRB of the wearable device; or
use, based on the first configuration policy, an SRB that has been set up on the second Uu interface, to bear a message transmitted on an SRB of the wearable device; and set up the radio bearer on the radio interface of the relay user equipment based on the first configuration policy.

Further, the connection unit 1240 is further configured to set up a radio interface connection to the wearable device after the wearable device configures a radio bearer on a radio interface of the wearable device based on the second message, so that the wearable device communicates with the base station by using the radio interface connection.

Therefore, when the apparatus for configuring a radio bearer for a wearable device provided in this embodiment of the present invention is applied, the base station can separately configure the radio bearers on the interfaces of the relay UE based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

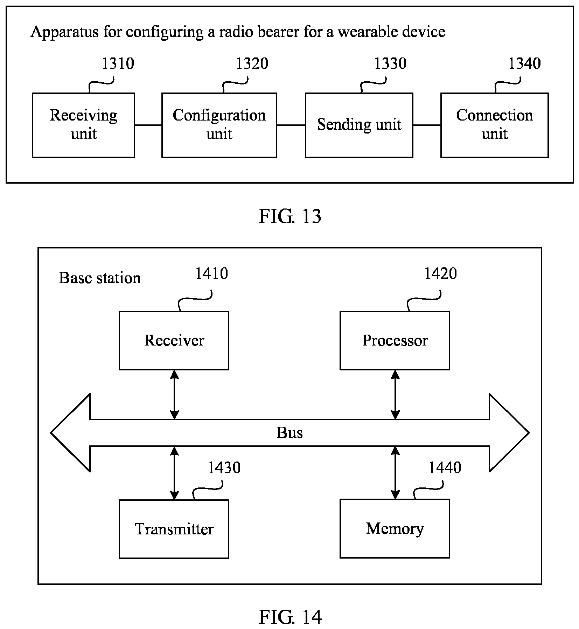

The content described in the foregoing embodiments can implement the method for configuring a radio bearer for a wearable device. Correspondingly, an embodiment of the present invention further provides an apparatus for configuring a radio bearer for a wearable device, to implement the method for configuring a radio bearer for a wearable device provided in the foregoing embodiment. As shown in FIG. 13, the apparatus includes: a receiving unit 1310, a configuration unit 1320, and a sending unit 1330.

The receiving unit 1310 is configured to receive a first message sent by a base station, where the first message includes first radio bearer configuration information.

The configuration unit 1320 is configured to configure a radio bearer on an interface of the wearable device based on the first radio bearer configuration information.

The sending unit 1330 is configured to send a first complete message to the base station.

Further, the sending unit 1330 is further configured to send a second message to the base station by using a cellular link, where the second message includes attribute information of relay user equipment that is to be connected to the apparatus, and the attribute information of the relay user equipment is used to enable the base station to initiate paging to the relay user equipment. Further, the apparatus further includes: a connection unit 1340, configured to set up a radio resource control RRC connection to the base station by using the cellular link.

Further, the connection unit 1340 is further configured to set up a radio interface connection to the relay user equipment; and
the sending unit 1330 is configured to send an RRC connection request message to the relay user equipment by using the radio interface connection that is set up, where the RRC connection request message is used to enable the relay user equipment to set up a signaling radio bearer SRB on a Uu interface and set up an RRC connection to the base station, and the SRB is used to bear the RRC connection request message.

Further, the first radio bearer configuration information received by the receiving unit 1310 includes a first configuration policy; and
the configuration unit 1320 is specifically configured to configure an SRB or a data radio bearer DRB on a radio interface of the apparatus based on the first configuration policy.

Further, the receiving unit 1310 is specifically configured to receive, by using the cellular link, the first message sent by the base station.

Further, the sending unit 1330 is specifically configured to receive, by using a relay link, the first message sent by the base station.

Further, the connection unit 1340 is further configured to set up a radio interface connection to the relay equipment; and
the sending unit 1330 is specifically configured to send the first complete message to the base station by using the radio interface connection that is set up.

Therefore, when the apparatus for configuring a radio bearer for a wearable device provided in this embodiment of the present invention is applied, the base station can separately configure the radio bearer on the interface of the WD based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

In addition, an embodiment of the present invention further provides a base station, to implement a method for configuring a radio bearer for a wearable device in the foregoing embodiments of the present invention. As shown in FIG. 14, the base station includes: a receiver 1410, a processor 1420, a transmitter 1430, and a memory 1440.

It can be understood that, in the foregoing embodiment of the apparatus for configuring a radio bearer for a wearable device, the receiving unit 1120 can be implemented by the receiver 1410 in this embodiment of the present invention, and the sending unit 1110 can be implemented by the transmitter 1430 in this embodiment of the present invention.

The determining unit 1140 and the connection unit 1130 can be implemented by the processor 1420 in this embodiment of the present invention. The processor 1420 further implements a processing process for the base station related to FIG. 7 to FIG. 10 and/or other processes in the technology described in this application.

The memory 1440 is configured to store program code and data of the base station.

It can be understood that FIG. 14 merely shows a simplified design of the base station. In actual application, the base station may include any quantity of transmitters, receivers, processors, controllers, memories, and the like, and all base stations that can implement the present invention fall within the protection scope of the present invention.

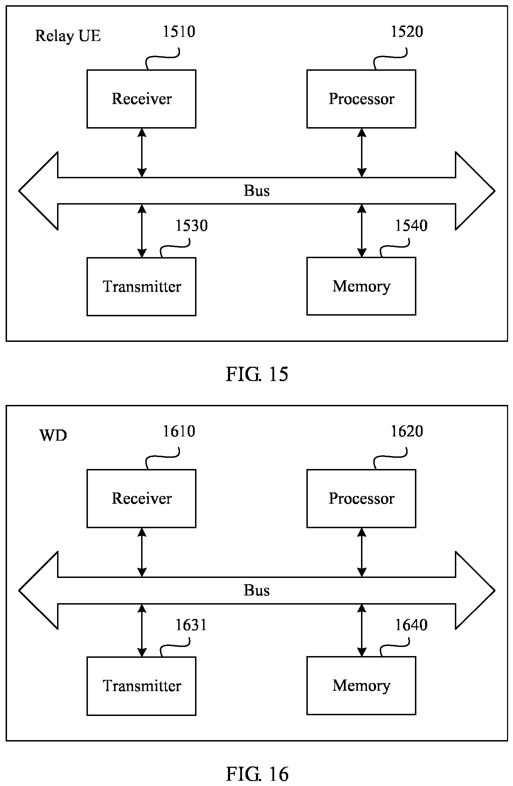

In addition, an embodiment of the present invention further provides relay UE, to implement a method for configuring a radio bearer for a wearable device in the foregoing embodiments of the present invention. As shown in FIG. 15, the relay UE includes: a receiver 1510, a processor 1520, a transmitter 1530, and a memory 1540.

It can be understood that, in the foregoing embodiment of the apparatus for configuring a radio bearer for a wearable device, the receiving unit 1210 can be implemented by the receiver 1510 in this embodiment of the present invention, and the sending unit 1230 can be implemented by the transmitter 1530 in this embodiment of the present invention.

The configuration unit 1220 and the connection unit 1240 can be implemented by the processor 1520 in this embodiment of the present invention. The processor 1520 further implements a processing process for the relay UE related to FIG. 7 to FIG. 10 and/or other processes in the technology described in this application.

The storage unit 1250 may be implemented by the memory 1540 in this embodiment of the present invention. The memory 1540 is configured to store program code and data of the relay UE.

It can be understood that FIG. 15 merely shows a simplified design of the relay UE. In actual application, the relay UE may include any quantity of transmitters, receivers, processors, controllers, memories, and the like, and all relay UE that can implement the present invention falls within the protection scope of the present invention.

In addition, an embodiment of the present invention further provides a WD, to implement a method for configuring a radio bearer for a wearable device in the foregoing embodiments of the present invention. As shown in FIG. 16, the WD includes: a receiver 1610, a processor 1620, a transmitter 1630, and a memory 1640.

It can be understood that, in the foregoing embodiment of the apparatus for configuring a radio bearer for a wearable device, the receiving unit 1310 can be implemented by the receiver 1610 in this embodiment of the present invention, and the sending unit 1330 can be implemented by the transmitter 1630 in this embodiment of the present invention.

The configuration unit 1320 and the connection unit 1340 can be implemented by the processor 1620 in this embodiment of the present invention. The processor 1620 further implements a processing process for the WD related to FIG. 7 to FIG. 10 and/or other processes in the technology described in this application.

The memory 1640 is configured to store program code and data of the WD.

It can be understood that FIG. 14 merely shows a simplified design of the WD. In actual application, the WD may include any quantity of transmitters, receivers, processors, controllers, memories, and the like, and all WDs that can implement the present invention fall within the protection scope of the present invention.

Therefore, when the apparatus for configuring a radio bearer for a wearable device provided in this embodiment of the present invention is applied, the base station can separately configure the radio bearers on the interfaces of the relay UE and the interface of the WD based on the radio bearer configuration information, so that the base station can control a message sent by the WD, and the relay UE performs transparent transmission for communication between the base station and the WD. In this way, a secure connection between the WD and the relay UE is implemented and complexity and processing load of the relay UE in processing a communication message between the base station and the WD are reduced.

A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing generally describes compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

The steps in the method or algorithm described in the embodiments disclosed in this specification may be implemented by hardware, software module executed by the processor, or combination of hardware and software. The software module may be located in a random access memory (RAM), a memory, a read-only memory (ROM), an electrically programmable ROM, an electrically erasable programmable ROM, a register, a hard disk, a removable disk, a CD-ROM, or a storage medium in any other form known in the art.

In the foregoing specific implementations, the objective, technical solutions, and benefits of the present invention are further described in detail. It should be understood that the foregoing descriptions are merely specific implementations of the present invention, but are not intended to limit the protection scope of the present invention as defined in the claims. Any modification, equivalent replacement, or improvement made without departing from the principle of the present invention as defined in the claims should fall within the protection scope of the present invention.

## Claims

1. A method for configuring a radio bearer for a wearable device (WD), wherein the method comprises:
sending (410), by a base station, a first message to relay user equipment, wherein the first message comprises first radio bearer configuration information;
receiving (420), by the base station, a first complete message sent by the relay user equipment after the relay user equipment configures radio bearers for the wearable device (WD) on interfaces of the relay user equipment based on the first radio bearer configuration information;
sending (430), by the base station, a second message to the wearable device (WD), wherein the second message comprises second radio bearer configuration information;
receiving (440), by the base station, a second complete message sent by the wearable device (WD) after the wearable device (WD) configures a radio bearer on an interface of the wearable device (WD) based on the second radio bearer configuration information; and
setting up (450), by the base station, a wireless connection to the wearable device (WD) by using the relay user equipment,
wherein before the sending (410), by a base station, the first message to the relay user equipment, the method further comprises:
receiving, by the base station, a third message directly sent by the wearable device (WD) by using a cellular link, wherein the third message comprises attribute information of the relay user equipment;
determining, by the base station, the relay user equipment based on the attribute information of the relay user equipment;
sending, by the base station, the attribute information of the relay user equipment to a mobility management entity, MME, when context information of the relay user equipment is not stored on the base station;
forwarding, by the base station to the relay user equipment, a paging message sent by the MME when the MME determines that the relay user equipment is in an idle mode;
receiving, by the base station, a radio resource control, RRC, connection request message sent by the relay user equipment based on the paging message; and
setting up, by the base station, an RRC connection to the relay user equipment based on the RRC connection request message.

2. The method according to claim 1, wherein before the receiving, by the base station, a third message sent by the wearable device (WD) by using a cellular link, the method further comprises: setting up, by the base station, an RRC connection to the wearable device (WD) by using the cellular link.

3. The method according to claim 1, wherein before the sending, by a base station, a first message to relay user equipment, the method further comprises:
receiving, by the base station, an evolved radio access bearer, E-RAB, setup message sent by the MME; and
sending, by the base station, the first message to the relay user equipment based on the E-RAB setup message.

4. The method according to claim 1, wherein the first radio bearer configuration information comprises a first configuration policy; and
the first configuration policy is used to instruct the relay user equipment to configure the radio bearers for the wearable device (WD) on a Uu interface and a radio interface of the relay user equipment, so that the radio interface of the relay user equipment bears a message transmitted on a signaling radio bearer, SRB, or a data radio bearer, DRB, of the wearable device (WD), and the message transmitted on the SRB or the DRB of the wearable device (WD) is transparently transmitted to the base station by using the Uu interface.

5. The method according to claim 1, wherein the first radio bearer configuration information comprises a first configuration policy and the first configuration policy instructs the relay user equipment to configure the radio bearer for the wearable device (WD) on a radio interface of the relay user equipment comprises:
instructing the relay user equipment to set up a signaling radio bearer, SRB, or a data radio bearer, DRB, on the radio interface; and
the first configuration policy instructs the relay user equipment to configure the radio bearer for the wearable device (WD) on a Uu interface of the relay user equipment specifically comprises:
instructing the relay user equipment to set up a first DRB on the Uu interface, wherein the first DRB bears the message transmitted on the SRB or the DRB of the wearable device (WD); or
instructing the relay user equipment to use a second DRB that has been set up on the Uu interface, to bear the message transmitted on the SRB or the DRB of the wearable device (WD); or
instructing the relay user equipment to use an SRB that has been set up on the Uu interface, to bear the message transmitted on the SRB of the wearable device (WD).

6. The method according to claim 1, wherein the second radio bearer configuration information comprises a second configuration policy; and
the second configuration policy is used by the wearable device (WD) to configure a signaling radio bearer, SRB, or a data radio bearer, DRB, on a radio interface of the wearable device (WD).

7. A method for configuring a radio bearer for a wearable device (WD), wherein the method comprises:
receiving (510), by relay user equipment, a first message sent by a base station, wherein the first message comprises first radio bearer configuration information;
configuring (520), by the relay user equipment, radio bearers for the wearable device (WD) on interfaces of the relay user equipment based on the first radio bearer configuration information; and
sending (530), by the relay user equipment, a first complete message to the base station, so that the base station sends a second message to the wearable device (WD) based on the first complete message,
wherein before the receiving (510), by the relay user equipment, the first message sent by the base station, the method further comprises:
receiving, by the relay user equipment, a paging message forwarded by the base station, wherein the paging message is sent by a mobility management entity, MME, when the MME determines that the relay user equipment is in an idle mode; and
sending, by the relay user equipment, a radio resource control, RRC, connection request message to the base station based on the paging message, and setting up an RRC connection to the base station.

8. The method according to claim 7, wherein the first radio bearer configuration information comprises a first configuration policy; and
the configuring, by the relay user equipment, the radio bearers for the wearable device (WD) on interfaces of the relay user equipment based on the first radio bearer configuration information specifically comprises:
separately configuring, by the relay user equipment, the radio bearers for the wearable device (WD) on a Uu interface and a radio interface of the relay user equipment based on the first configuration policy; and
setting up and storing, by the relay user equipment, a mapping relationship between the radio bearer on the Uu interface and the radio bearer on the radio interface.

9. The method according to claim 8, wherein the configuring, by the relay user equipment, the radio bearer for the wearable device (WD) on the Uu interface of the relay user equipment based on the first configuration policy comprises:
setting up, by the relay user equipment, a first data radio bearer, DRB, on the Uu interface based on the first configuration policy, wherein the first DRB bears a message transmitted on a signaling radio bearer, SRB, or a DRB of the wearable device (WD); or
using, by the relay user equipment based on the first configuration policy, a second DRB that has been set up on the Uu interface, to bear a message transmitted on an SRB or a DRB of the wearable device (WD); or
using, by the relay user equipment based on the first configuration policy, an SRB that has been set up on the Uu interface, to bear a message transmitted on an SRB of the wearable device (WD); and
setting up, by the relay user equipment, the radio bearer on the radio interface of the relay user equipment based on the first configuration policy.

10. The method according to claim 7, wherein the method further comprises:
setting up, by the relay user equipment, a radio interface connection to the wearable device (WD) after the wearable device (WD) configures the radio bearer on the radio interface of the wearable device (WD) based on the second message, so that the wearable device (WD) communicates with the base station by using the radio interface connection.

## Patentansprüche

1. Verfahren zum Konfigurieren eines Funkträgers für eine tragbare Vorrichtung (*wearable device* - WD), wobei das Verfahren Folgendes umfasst:
Senden (410), durch eine Basisstation, einer ersten Nachricht an eine Relaybenutzereinrichtung, wobei die erste Nachricht erste Funkträgerkonfigurationsinformationen umfasst;
Empfangen (420), durch die Basisstation, einer ersten vollständigen Nachricht, die durch die Relaybenutzereinrichtung gesendet wird, nachdem die Relaybenutzereinrichtung Funkträger für die tragbare Vorrichtung (WD) auf Schnittstellen der Relaybenutzereinrichtung basierend auf den ersten Funkträgerkonfigurationsinformationen konfiguriert;
Senden (430), durch die Basisstation, einer zweiten Nachricht an die tragbare Vorrichtung (WD), wobei die zweite Nachricht zweite Funkträgerkonfigurationsinformationen umfasst;
Empfangen (440), durch die Basisstation, einer zweiten vollständigen Nachricht, die durch die tragbare Vorrichtung (WD) gesendet wird, nachdem die tragbare Vorrichtung (WD) einen Funkträger auf einer Schnittstelle der tragbaren Vorrichtung (WD) basierend auf den zweiten Funkträgerkonfigurationsinformationen konfiguriert; und
Einrichten (450), durch die Basisstation, einer drahtlosen Verbindung mit der tragbaren Vorrichtung (WD) durch Verwenden der Relaybenutzereinrichtung, wobei vor dem Senden (410), durch eine Basisstation, der ersten Nachricht an die Relaybenutzereinrichtung, das Verfahren ferner Folgendes umfasst:
Empfangen, durch die Basisstation, einer dritten Nachricht, die durch die tragbare Vorrichtung (WD) durch Verwenden einer Mobilfunkverknüpfung direkt gesendet wird, wobei die dritte Nachricht Attributinformationen der Relaybenutzereinrichtung umfasst;
Bestimmen, durch die Basisstation, der Relaybenutzereinrichtung basierend auf den Attributinformationen der Relaybenutzereinrichtung;
Senden, durch die Basisstation, der Attributinformationen der Relaybenutzereinrichtung an eine Mobilitätsverwaltungseinheit (*mobility management entity-* MME), wenn Kontextinformationen der Relaybenutzereinrichtung nicht auf der Basisstation gespeichert sind;
Weiterleiten, durch die Basisstation an die Relaybenutzereinrichtung, einer Funkrufdienstnachricht, die durch die MME gesendet wird, wenn die MME bestimmt, dass sich die Relaybenutzereinrichtung in einem inaktiven Zustand befindet;
Empfangen, durch die Basisstation, einer Funkressourcensteuerungs(radio *resource control-* RRC)-Verbindungsanforderungsnachricht, die durch die Relaybenutzereinrichtung basierend auf der Funkrufdienstnachricht gesendet wird; und
Einrichten, durch die Basisstation, einer RRC-Verbindung mit der Relaybenutzereinrichtung basierend auf der RRC-Verbindungsanforderungsnachricht.

2. Verfahren nach Anspruch 1, wobei vor dem Empfangen, durch die Basisstation, einer dritten Nachricht, die durch die tragbare Vorrichtung (WD) durch Verwenden einer Mobilfunkverknüpfung gesendet wird, das Verfahren ferner Folgendes umfasst: Einrichten, durch die Basisstation, einer RRC-Verbindung mit der tragbaren Vorrichtung (WD) durch Verwenden der Mobilfunkverknüpfung.

3. Verfahren nach Anspruch 1, wobei vor dem Senden, durch eine Basisstation, einer ersten Nachricht an die Relaybenutzereinrichtung das Verfahren ferner Folgendes umfasst:
Empfangen, durch die Basisstation, einer Einrichtungsnachricht eines Evolved-Funkzugriffsträgers (*evolved radio access bearer-* E-RAB), die durch die MME gesendet wird; und
Senden, durch die Basisstation, der ersten Nachricht an die Relaybenutzereinrichtung basierend auf der E-RAB-Einrichtungsnachricht.

4. Verfahren nach Anspruch 1, wobei die ersten Funkträgerkonfigurationsinformationen eine erste Konfigurationsrichtlinie umfassen; und
die erste Konfigurationsrichtlinie verwendet wird, um die Relaybenutzereinrichtung anzuweisen, die Funkträger für die tragbare Vorrichtung (WD) auf einer Uu-Schnittstelle und einer Funkschnittstelle der Relaybenutzereinrichtung zu konfigurieren, so dass die Funkschnittstelle der Relaybenutzereinrichtung eine Nachricht trägt, die auf einem Signalisierungsfunkträger (*signaling radio bearer-* SRB) oder einem Datenfunkträger (*data radio bearer-* DRB) der tragbaren Vorrichtung (WD) übertragen wird, und die Nachricht, die auf dem SRB oder dem DRB der tragbaren Vorrichtung (WD) übertragen wird, an die Basisstation durch Verwenden der Uu-Schnittstelle transparent übertragen wird.

5. Verfahren nach Anspruch 1, wobei die ersten Funkträgerkonfigurationsinformationen eine erste Konfigurationsrichtlinie umfassen und, dass die erste Konfigurationsrichtlinie die Relaybenutzereinrichtung anweist, den Funkträger für die tragbare Vorrichtung (WD) an einer Funkschnittstelle der Relaybenutzereinrichtung zu konfigurieren, Folgendes umfasst:
Anweisen der Relaybenutzereinrichtung, einen Signalisierungsfunkträger (SRB) oder einen Datenfunkträger (DRB) auf der Funkschnittstelle einzurichten; und
wobei, dass die erste Konfigurationsrichtlinie die Relaybenutzereinrichtung anweist, den Funkträger für die tragbare Vorrichtung (WD) auf einer Uu-Schnittstelle der Relaybenutzereinrichtung zu konfigurieren, Folgendes umfasst:
Anweisen der Relaybenutzereinrichtung, einen ersten DRB auf der Uu-Schnittstelle einzurichten, wobei der erste DRB die Nachricht trägt, die auf dem SRB oder dem DRB der tragbaren Vorrichtung (WD) übertragen wird; oder
Anweisen der Relaybenutzereinrichtung, einen zweiten DRB zu verwenden, der auf der Uu-Schnittstelle eingerichtet wurde, um die Nachricht zu tragen, die auf dem SRB oder dem DRB der tragbaren Vorrichtung (WD) übertragen wird; oder
Anweisen der Relaybenutzereinrichtung, einen SRB zu verwenden, der auf der Uu-Schnittstelle eingerichtet wurde, um die Nachricht zu tragen, die auf dem SRB der tragbaren Vorrichtung (WD) übertragen wird.

6. Verfahren nach Anspruch 1, wobei die zweiten Funkträgerkonfigurationsinformationen eine zweite Konfigurationsrichtlinie umfassen; und
die zweite Konfigurationsrichtlinie durch die tragbare Vorrichtung (WD) verwendet wird, um einen Signalisierungsfunkträger (SRB) oder einen Datenfunkträger (DRB) auf einer Funkschnittstelle der tragbaren Vorrichtung (WD) zu konfigurieren.

7. Verfahren zum Konfigurieren eines Funkträgers für eine tragbare Vorrichtung (WD), wobei das Verfahren Folgendes umfasst:
Empfangen (510), durch die Relaybenutzereinrichtung, einer ersten Nachricht, die durch eine Basisstation gesendet wird, wobei die erste Nachricht erste Funkträgerkonfigurationsinformationen umfasst;
Konfigurieren (520), durch die Relaybenutzereinrichtung, von Funkträgern für die tragbare Vorrichtung (WD) auf Schnittstellen der Relaybenutzereinrichtung basierend auf den ersten Funkträgerkonfigurationsinformationen; und
Senden (530), durch die Relaybenutzereinrichtung, einer ersten vollständigen Nachricht an die Basisstation, so dass die Basisstation eine zweite Nachricht an die tragbare Vorrichtung (WD) basierend auf der ersten vollständigen Nachricht sendet,
wobei vor dem Empfangen (510), durch die Relaybenutzereinrichtung, der ersten Nachricht, die durch die Basisstation gesendet wird, das Verfahren ferner Folgendes umfasst:
Empfangen, durch die Relaybenutzereinrichtung, einer Funkrufdienstnachricht, die durch die Basisstation weitergeleitet wird, wobei die Funkrufdienstnachricht durch eine Mobilitätsverwaltungseinheit (MME) gesendet wird, wenn die MME bestimmt, dass sich die Relaybenutzereinrichtung in einem inaktiven Zustand befindet; und
Senden, durch die Relaybenutzereinrichtung, einer Funkressourcensteuerungs(RRC)-Verbindungsanforderungsnachricht an die Basisstation basierend auf der Funkrufdienstnachricht und Einrichten einer RRC-Verbindung mit der Basisstation.

8. Verfahren nach Anspruch 7, wobei die ersten Funkzugriffsträgerkonfigurationsinformationen eine erste Konfigurationsrichtlinie umfassen; und
das Konfigurieren, durch die Relaybenutzereinrichtung, der Funkträger für die tragbare Vorrichtung (WD) auf Schnittstellen der Relaybenutzereinrichtung basierend auf den ersten Funkträgerkonfigurationsinformationen, speziell Folgendes umfasst:
separates Konfigurieren, durch die Relaybenutzereinrichtung, der Funkträger für die tragbare Vorrichtung (WD) auf einer Uu-Schnittstelle und einer Funkschnittstelle der Relaybenutzereinrichtung basierend auf der ersten Konfigurationsrichtlinie; und
Einrichten und Speichern, durch die Relaybenutzereinrichtung, einer Zuordnungsbeziehung zwischen dem Funkträger auf der Uu-Schnittstelle und dem Funkträger auf der Funkschnittstelle.

9. Verfahren nach Anspruch 8, wobei das Konfigurieren, durch die Relaybenutzereinrichtung, des Funkträgers für die tragbare Vorrichtung (WD) auf der Uu-Schnittstelle der Relaybenutzereinrichtung basierend auf der ersten Konfigurationsrichtlinie Folgendes umfasst:
Einrichten, durch die Relaybenutzereinrichtung, eines ersten Datenfunkträgers (DRB) auf der Uu-Schnittstelle basierend auf der ersten Konfigurationsrichtlinie, wobei der erste DRB eine Nachricht trägt, die auf einem Signalisierungsfunkträger (SRB) oder einem DRB der tragbaren Vorrichtung übertragen wird; oder
Verwenden, durch die Relaybenutzereinrichtung basierend auf der ersten Konfigurationsrichtlinie, eines zweiten DRB, der auf der Uu-Schnittstelle eingerichtet wurde, um eine Nachricht zu tragen, die auf einem SRB oder einem DRB der tragbaren Vorrichtung (WD) übertragen wird; oder
Verwenden, durch die Relaybenutzereinrichtung basierend auf der ersten Konfigurationsrichtlinie, eines SRB, der auf der Uu-Schnittstelle eingerichtet wurde, um eine Nachricht zu tragen, die auf einem SRB der tragbaren Vorrichtung (WD) übertragen wird; und
Einrichten, durch die Relaybenutzereinrichtung, des Funkträgers auf der Funkschnittstelle der Relaybenutzereinrichtung basierend auf der ersten Konfigurationsrichtlinie.

10. Verfahren nach Anspruch 7, wobei das Verfahren ferner Folgendes umfasst:
Einrichten, durch die Relaybenutzereinrichtung, einer Funkschnittstellenverbindung mit der tragbaren Vorrichtung (WD), nachdem die tragbare Vorrichtung (WD) den Funkträger auf der Funkschnittstelle der tragbaren Vorrichtung (WD) basierend auf der zweiten Nachricht konfiguriert, so dass die tragbare Vorrichtung (WD) mit der Basisstation durch Verwenden der Funkschnittstellenverbindung kommuniziert.

## Revendications

1. Procédé de configuration d'un support radio pour un dispositif portable (WD), le procédé comprenant :
l'envoi (410), par une station de base, d'un premier message à l'équipement utilisateur relais, le premier message comprenant des premières informations de configuration de support radio ;
la réception (420), par la station de base, d'un premier message complet envoyé par l'équipement utilisateur relais après que l'équipement utilisateur relais a configuré les supports radio pour le dispositif portable (WD) sur les interfaces de l'équipement utilisateur relais sur la base des premières informations de configuration de support radio ;
l'envoi (430), par la station de base, d'un deuxième message au dispositif portable (WD), le deuxième message comprenant des secondes informations de configuration de support radio ;
la réception (440), par la station de base, d'un deuxième message complet envoyé par le dispositif portable (WD) après que le dispositif portable (WD) a configuré un support radio sur une interface du dispositif portable (WD) sur la base des secondes informations de configuration de support radio ; et
l'établissement (450), par la station de base, d'une connexion sans fil au dispositif portable (WD) en utilisant l'équipement utilisateur relais,
dans lequel avant l'envoi (410), par une station de base, du premier message à l'équipement utilisateur relais, le procédé comprend en outre :
la réception, par la station de base, d'un troisième message envoyé directement par le dispositif portable (WD) en utilisant une liaison cellulaire, le troisième message comprenant des informations d'attribut de l'équipement utilisateur relais ;
la détermination, par la station de base, de l'équipement utilisateur relais sur la base des informations d'attribut de l'équipement utilisateur relais ;
l'envoi, par la station de base, des informations d'attribut de l'équipement utilisateur relais à une entité de gestion de mobilité, MME, lorsque les informations de contexte de l'équipement utilisateur relais ne sont pas stockées sur la station de base ;
la retransmission, par la station de base à l'équipement utilisateur relais, d'un message de recherche envoyé par le MME lorsque le MME détermine que l'équipement utilisateur relais est dans un mode inactif ;
la réception, par la station de base, d'un message de demande de connexion de commande de ressources radio, RRC, envoyé par l'équipement utilisateur relais sur la base du message de recherche ; et
l'établissement, par la station de base, d'une connexion RRC à l'équipement utilisateur relais sur la base du message de demande de connexion RRC.

2. Procédé selon la revendication 1, dans lequel avant la réception, par la station de base, d'un troisième message envoyé par le dispositif portable (WD) en utilisant une liaison cellulaire, le procédé comprend en outre :
l'établissement, par la station de base, d'une connexion RRC au dispositif portable (WD) en utilisant la liaison cellulaire.

3. Procédé selon la revendication 1, dans lequel avant l'envoi, par une station de base, d'un premier message à l'équipement utilisateur relais, le procédé comprend en outre :
la réception, par la station de base, d'un message d'établissement de support d'accès radio évolué, E-RAB, envoyé par le MME ; et
l'envoi, par la station de base, du premier message à l'équipement utilisateur relais sur la base du message d'établissement E-RAB.

4. Procédé selon la revendication 1, dans lequel les premières informations de configuration de support radio comprennent une première politique de configuration ; et
la première politique de configuration est utilisée pour donner l'instruction à l'équipement utilisateur relais de configurer les supports radio pour le dispositif portable (WD) sur une interface Uu et une interface radio de l'équipement utilisateur relais, de sorte que l'interface radio de l'équipement utilisateur relais transporte un message transmis sur un support radio de signalisation, SRB, ou un support radio de données, DRB, du dispositif portable (WD), et le message transmis sur le SRB ou le DRB du dispositif portable (WD) est transmis de manière transparente à la station de base en utilisant l'interface Uu.

5. Procédé selon la revendication 1, dans lequel les premières informations de configuration de support radio comprennent une première politique de configuration et la première politique de configuration donne l'instruction à l'équipement utilisateur relais de configurer le support radio pour le dispositif portable (WD) sur une interface radio de l'équipement utilisateur relais comprenant :
l'instruction à l'équipement utilisateur relais d'établir un support radio de signalisation, SRB, ou un support radio de données, DRB, sur l'interface radio ; et
la première politique de configuration donnant l'instruction à l'équipement utilisateur relais de configurer le support radio pour le dispositif portable (WD) sur une interface Uu de l'équipement utilisateur relais comprend spécifiquement :
l'instruction à l'équipement utilisateur relais de configurer un premier DRB sur l'interface Uu, le premier DRB transportant le message transmis sur le SRB ou le DRB du dispositif portable (WD) ; ou
l'instruction à l'équipement utilisateur relais d'utiliser un second DRB qui a été établi sur l'interface Uu, pour transporter le message transmis sur le SRB ou le DRB du dispositif portable (WD) ; ou
l'instruction à l'équipement utilisateur relais d'utiliser un SRB qui a été établi sur l'interface Uu, pour transporter le message transmis sur le SRB du dispositif portable (WD).

6. Procédé selon la revendication 1, dans lequel les secondes informations de configuration de support radio comprennent une seconde politique de configuration ; et
la seconde politique de configuration est utilisée par le dispositif portable (WD) pour configurer un support radio de signalisation, SRB, ou un support radio de données, DRB, sur une interface radio du dispositif portable (WD).

7. Procédé de configuration d'un support radio pour un dispositif portable (WD), le procédé comprenant :
la réception (510), par un équipement utilisateur relais, d'un premier message envoyé par une station de base, le premier message comprenant des premières informations de configuration de support radio ;
la configuration (520), par l'équipement utilisateur relais, des supports radio pour le dispositif portable (WD) sur les interfaces de l'équipement utilisateur relais sur la base des premières informations de configuration de support radio ; et
l'envoi (530), par l'équipement utilisateur relais, d'un premier message complet à la station de base, de sorte que la station de base envoie un deuxième message au dispositif portable (WD) sur la base du premier message complet,
dans lequel avant la réception (510), par l'équipement utilisateur relais, du premier message envoyé par la station de base, le procédé comprend en outre :
la réception, par l'équipement utilisateur relais, d'un message de recherche retransmis par la station de base, le message de recherche étant envoyé par une entité de gestion de mobilité, MME, lorsque le MME détermine que l'équipement utilisateur relais est dans un mode inactif ; et
l'envoi, par l'équipement utilisateur relais, d'un message de demande de connexion de commande de ressources radio, RRC, à la station de base sur la base du message de recherche, et l'établissement d'une connexion RRC avec la station de base.

8. Procédé selon la revendication 7, dans lequel les premières informations de configuration de support radio comprennent une première politique de configuration ; et
la configuration, par l'équipement utilisateur relais, des supports radio pour le dispositif portable (WD) sur des interfaces de l'équipement utilisateur relais sur la base des premières informations de configuration de support radio comprend spécifiquement :
la configuration séparément, par l'équipement utilisateur relais, des supports radio pour le dispositif portable (WD) sur une interface Uu et d'une interface radio de l'équipement utilisateur relais sur la base de la première politique de configuration ; et
l'établissement et le stockage, par l'équipement utilisateur relais, d'une relation de mappage entre le support radio sur l'interface Uu et le support radio sur l'interface radio.

9. Procédé selon la revendication 8, dans lequel la configuration, par l'équipement utilisateur relais, du support radio pour le dispositif portable (WD) sur l'interface Uu de l'équipement utilisateur relais sur la base de la première politique de configuration comprend :
l'établissement, par l'équipement utilisateur relais, d'un premier support radio de données, DRB, sur l'interface Uu sur la base de la première politique de configuration, le premier DRB transportant un message transmis sur un support radio de signalisation, SRB, ou un DRB du dispositif portable (WD) ; ou
l'utilisation, par l'équipement utilisateur relais sur la base de la première politique de configuration, d'un second DRB qui a été établi sur l'interface Uu, pour transporter un message transmis sur un SRB ou un DRB du dispositif portable (WD) ; ou
l'utilisation, par l'équipement utilisateur relais sur la base de la première politique de configuration, d'un SRB qui a été établi sur l'interface Uu, pour transporter un message transmis sur un SRB du dispositif portable (WD) ; et
l'établissement, par l'équipement utilisateur relais, du support radio sur l'interface radio de l'équipement utilisateur relais sur la base de la première politique de configuration.

10. Procédé selon la revendication 7, dans lequel le procédé comprend en outre :
l'établissement, par l'équipement utilisateur de relais, d'une connexion d'interface radio au dispositif portable (WD) après que le dispositif portable (WD) a configuré le support radio sur l'interface radio du dispositif portable (WD) sur la base du deuxième message, de sorte que le dispositif portable (WD) communique avec la station de base en utilisant la connexion d'interface radio.
